(19) Europäisches Patentamt
European Patent Office
Office européen des brevets

(11) EP 3 487 898 B1

(12) # EUROPÄISCHE PATENTSCHRIFT

(45) Veröffentlichungstag und Bekanntmachung des Hinweises auf die Patenterteilung:
**07.10.2020 Patentblatt 2020/41**

(21) Anmeldenummer: **17739610.8**

(22) Anmeldetag: **20.07.2017**

(51) Int Cl.:
*C08G 18/48* (2006.01) *C08G 18/67* (2006.01)
*C08G 18/75* (2006.01) *C09D 5/44* (2006.01)
*C08F 257/02* (2006.01) *C08K 3/36* (2006.01)
*C09D 133/08* (2006.01) *C08G 18/08* (2006.01)
*C08G 18/12* (2006.01) *C08G 18/28* (2006.01)
*C09D 175/06* (2006.01) *C09D 175/14* (2006.01)
*C08G 18/32* (2006.01) *C08G 18/42* (2006.01)
*C08L 75/06* (2006.01)

(86) Internationale Anmeldenummer:
**PCT/EP2017/068334**

(87) Internationale Veröffentlichungsnummer:
**WO 2018/015484 (25.01.2018 Gazette 2018/04)**

(54) **MISCHSYSTEM ZUR HERSTELLUNG VON WÄSSRIGEN REPARATURBESCHICHTUNGSMITTELN, VERFAHREN ZU DEREN HERSTELLUNG SOWIE AUS DEM MISCHSYSTEM HERGESTELLTE WÄSSRIGE REPARATURBESCHICHTUNGSMITTEL**

MIXING SYSTEM FOR PRODUCING AQUEOUS REPAIR COATING AGENTS, METHOD FOR PRODUCING SAME AND AQUEOUS REPAIR COATING AGENT PRODUCED FROM THE MIXED SYSTEM

SYSTEME DE MELANGE DESTINE A FABRIQUER DES AGENTS DE REVETEMENT DE REPARATION EN BASE AQUEUSE, SON PROCEDE DE FABRICATION ET AGENTS DE REVETEMENT DE REPARATION EN BASE AQUEUSE FABRIQUES A PARTIR DU SYSTEME DE MELANGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.07.2016 EP 16180450**

(43) Veröffentlichungstag der Anmeldung:
**29.05.2019 Patentblatt 2019/22**

(73) Patentinhaber: **BASF Coatings GmbH**
**48165 Münster (DE)**

(72) Erfinder:
- **CORTEN, Cathrin**
  **48165 Münster (DE)**
- **EIERHOFF, Dirk**
  **48165 Münster (DE)**
- **SCHNIEDERS, Britta**
  **48165 Münster (DE)**
- **FREITAG, Nicole**
  **48165 Münster (DE)**
- **RADEMACHER, Josef**
  **48165 Münster (DE)**
- **GRABBE, Michael**
  **48165 Münster (DE)**

(74) Vertreter: **BASF IP Association**
**BASF SE**
**GBI-C006**
**67056 Ludwigshafen (DE)**

(56) Entgegenhaltungen:
**US-A1- 2015 064 476**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Mischsystem zur Herstellung von Reparaturbeschichtungsmitteln, insbesondere für den Bereich der Automobillackierung, umfassend wenigstens die voneinander verschiedenen Komponenten (1), (2) und (3), nämlich Komponente (1) als Stammlack, Komponente (2) als Basisfarbe und Komponente (3) als Rheologiemodul, wobei wenigstens eine der Komponenten (1) bis (3) wenigstens eine wässrige Dispersion enthaltend mindestens ein durch mehrstufige Emulsionspolymerisation hergestelltes Polymerisat umfasst und wenigstens eine der Komponenten (1) bis (3) wenigstens einen aliphatischen Monoalkohol mit 5 Kohlenstoffatomen und/oder wenigstens einen aliphatischen Monoalkohol mit 6 Kohlenstoffatomen umfasst. Ferner betrifft die vorliegende Erfindung ein wässriges Reparaturbeschichtungsmittel, welches hergestellt wird durch das Vermischen der Komponenten (1) bis (3) sowie ein Verfahren zur Herstellung von wässrigen Reparaturbeschichtungsmitteln. Des Weiteren betrifft die vorliegende Erfindung die Verwendung des Mischsystems zur Herstellung von wässrigen Reparaturbeschichtungsmitteln für die Automobilreparaturlackierung.

## Stand der Technik

Übliche Verfahren zur Ausbesserung von Schadstellen an einer gegebenenfalls mehrschichtigen Lackierung von Bauteilen einer Karosserie, insbesondere in der Autoreparaturlackierung, beinhalten die Schritte einer sorgfältigen Reinigung und Schleifen, ggf. Spachteln und/oder Füllern an der Schadstelle. Danach wird die Schadstelle ggf. nach einer weiteren Vorbehandlung üblicherweise deckend und auslaufend in die angrenzenden Bereiche hinein mit geeigneten Überzugsmitteln behandelt wie zum Beispiel mit geeigneten Basislacken. Nach dem Antrocknen durch Ablüften des so hergestellten Überzugs werden der Überzug und die angrenzenden Teile üblicherweise mit einem Klarlack überspritzt und dann gemeinsam mit den zuvor aufgebrachten Schichten getrocknet.

Während im Bereich der OEM-Serienlackierung größtenteils wässrige Beschichtungsmittel zum Einsatz kommen, werden im Bereich der Autoreparaturlackierung teilweise noch konventionelle, d.h. lösemittelhaltige, Beschichtungsmittel eingesetzt. Es wird jedoch aus ökologischen Gründen versucht entsprechende Beschichtungsmittel basierend auf organischen Lösemitteln durch wässrige Beschichtungsmittel zu ersetzen. Mit diesen wässrigen Beschichtungsmitteln treten jedoch im Vergleich zu den entsprechenden lösemittelbasierten Beschichtungsmitteln oft Probleme hinsichtlich der Qualität der resultierenden Beschichtung auf. Beispielsweise können während der Anwendung von wässrigen Basislacken auf einem Substrat Benetzungsfehler auftreten. Weitere Nachteile sind eine nicht ausreichende Deckkraft der Beschichtungsmittel auf einem Substrat. Ferner ist auf eine vermehrte Wolkenbildung beobachtet und es kommt zu einem schlechteren Flopeffekt bei Effektbeschichtungsmitteln aufgrund einer schlechteren Orientierung der Effektpigmente. Entsprechende negative Effekte treten gerade dann, wenn versucht wird die relativ langen Flash-Off und Trocknungszeiten von wässrigen Beschichtungsmitteln zu reduzieren, um diesen generellen Nachteil, gerade aus wirtschaftlicher Sicht, gegenüber lösemittel-basierten Beschichtungsmitteln, auszugleichen.

Heutzutage werden extrem hohe Anforderungen an die Reparaturlackierung von Fahrzeugen gestellt. So soll das Lackierergebnis optisch und technologisch mit einer eingebrannten Erstlackierung, trotz wesentlicher Unterschiede in den Rahmenbedingungen, vergleichbar sein.

Gerade im Bereich der Autoreparaturlackierung ist es bei der Ausbesserung von Schadstellen wichtig, dass die zur Ausbesserung eingesetzten Beschichtungsmittel die gleichen oder zumindest annährend gleiche Farbtöne aufweisen wie die Beschichtung aus der OEM-Serienlackierung, damit nach der Reparatur nicht erkennbar ist, dass eine Ausbesserung überhaupt stattgefunden hat.

Es besteht zwar prinzipiell die Möglichkeit, dass die entsprechenden Beschichtungsmittel direkt bereits vom Lackhersteller im gewünschten Farbton geliefert werden. Nachteilig daran ist jedoch, dass davon oftmals jeweils nur geringe Mengen für die Ausbesserung erforderlich sind, die entsprechenden fertige Beschichtungsmittel jedoch oftmals zumindest nicht über einen langen Zeitraum wie beispielsweise einem Zeitraum von mehr als 12 Monaten lagerstabil sind. Aus ökonomischen Gründen ist eine solche Vorgehensweise daher nachteilig.

Es hat sich daher gezeigt, dass die individuelle Herstellung von Beschichtungsmitteln gerade im Bereich der Autoreparaturlackierung vorteilhaft ist. Zu diesem Zweck werden entsprechende Mischsysteme umfassend verschiedene Komponenten zur Verfügung gestellt, die je nach Anforderung individuell miteinander vermischt werden, um das entsprechende Beschichtungsmittel herzustellen. Diese Herstellung aus einem Mischsystem hat den Vorteil, dass nicht jeder Farbton einzeln hergestellt und bevorratet werden muss und dass somit Produktions-, Distributions- und Lagerhaltungskosten gesenkt werden können. Dabei ist es essentiell, dass die Komponenten des Mischsystems eine ausreichende Lagerstabilität (mindestens 12 Monate) aufweisen.

Mischsysteme im Bereich der Automobilreparaturlackierung sind prinzipiell bekannt. So umfassen diese für gewöhnlich eine pigmentfreie Stammlackkomponente, mehrere unterschiedlich pigmentierte Basisfarben und einen Komponente enthaltend ein oder mehrere organische und/oder anorganische Verdicker zur Rheologiesteuerung.

Mischsysteme zur Herstellung von wässrigen Basislackzusammensetzungen sind beispielsweise bekannt aus

WO 92/17554 A1 und WO 01/18129 A1. Diese Mischsysteme ermöglichen die Herstellung von Zusammensetzungen mit genau festgelegter Farbtönung aus verschiedenen Basisfarben.

## Aufgaben

Der vorliegenden Erfindung lag somit die Aufgabe zugrunde ein Mischsystem zur Verfügung zu stellen, mittels dessen wässrige Reparaturbeschichtungsmittel für die Automobilreparaturlackierung hergestellt werden können. Das aus dem Mischsystem hergestellte wässrige Reparaturbeschichtungsmittel soll dazu geeignet sein eine signifikante Reduktion der Flash-Off- bzw. Trocknungszeiten zwischen den einzelnen Lackiergängen zu erzielen. Ferner soll die aus dem wässrigen Reparaturbeschichtungsmittel hergestellte Beschichtung frei von Filmfehlern sein. Zudem sollen die Beschichtungen einen guten metallischen Flop bei Effektlackierungen und eine wolkenfreie Oberfläche aufweisen. Gleichzeitig sollen die übrigen Eigenschaften der Beschichtung, wie beispielsweise die Haftung auf der Originallackierung nicht negativ beeinflusst werden.

Die Haftungsproblematik ist insbesondere dann eklatant, wenn die beschichteten Substrate der Witterung ausgesetzt sind. Die Aufgabe der vorliegenden Erfindung bestand somit auch darin, ein wässriges Reparaturbeschichtungsmittel für Beschichtungen zur Verfügung zu stellen, die auch nachdem sie der Witterung ausgesetzt waren, noch hervorragende Haftungseigenschaften besitzen.

Nach Bewitterung treten oft weitere Probleme, insbesondere Blasenbildung und Quellungen auf. Eine weitere Aufgabe der vorliegenden Erfindung bestand also ferner darin, dass Auftreten von Blasen und Quellungen zu verhindern oder zu reduzieren.

## Lösung der Aufgabe

Die vorstehend beschriebenen Aufgaben werden gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher ein Mischsystem zur Herstellung von wässrigen Reparaturbeschichtungsmitteln enthaltend

- wenigstens eine Komponente (1) als pigmentfreien Stammlack enthaltend mindestens ein physikalisch härtendes Polyurethan oder ein selbstvernetzendes Polyurethan oder ein fremdvernetzendes Polyurethan
- wenigstens eine Komponente (2) als Basisfarbe enthaltend mindestens ein physikalisch härtendes Polyurethan oder ein selbstvernetzendes Polyurethan oder ein fremdvernetzendes Polyurethan und mindestens ein farbgebendes und/oder optisch effektgebendes Pigment
- wenigstens eine Komponente (3) als Rheologiemodul enthaltend mindestens einen anorganischen und/oder organischen Verdicker,

dadurch gekennzeichnet, dass
wenigstens eine der Komponenten (1), (2) oder (3) eine wässrige Dispersion enthaltend wenigstens ein Polymerisat SCS umfasst und wenigstens eine der Komponenten (1), (2) oder (3) wenigstens einen aliphatischen Monoalkohol mit 5 Kohlenstoffatomen und/oder wenigstens einen aliphatischen Monoalkohol mit 6 Kohlenstoffatomen umfasst,
wobei
die wässrige Dispersion hergestellt wird durch die aufeinanderfolgende radikalische Emulsionspolymerisation von drei voneinander verschiedenen Monomerenmischungen (A), (B) und (C) von olefinisch ungesättigten Monomeren,
wobei
optional wenigstens eine der Monomerenmischungen (A), (B) oder (C) mindestens ein wenigstens eine olefinisch ungesättigte Gruppe aufweisendes Polyurethan (P) enthält und
wobei
vor Zumischung des optionalen Polyurethans (P) zu wenigstens einer der Monomerenmischungen (A), (B) oder (C) die Monomerenmischung (A) mindestens 50 Gew.-% von Monomeren mit einer Löslichkeit in Wasser von kleiner als 0,5 g/l bei 25 °C enthält und ein Polymerisat (a), welches aus der Mischung (A) hergestellt wird, eine Glasübergangstemperatur von 10 bis 65 °C besitzt,
die Monomerenmischung (B) mindestens ein mehrfach ungesättigtes Monomer enthält und ein Polymerisat (b), welches aus der Mischung (B) hergestellt wird, eine Glasübergangstemperatur von -35 bis 15°C besitzt,
ein Polymerisat (c), welches aus der Monomerenmischung (C) hergestellt wird, eine Glasübergangstemperatur von -50 bis 15 °C besitzt,
und wobei

i. zunächst die Monomerenmischung (A) polymerisiert wird,

ii. dann die Monomerenmischung (B) in Gegenwart des unter i. hergestellten Polymerisats polymerisiert wird, und

iii. danach die Monomerenmischung (C) in Gegenwart des unter ii. hergestellten Polymerisats polymerisiert wird.

Das neue Mischsystem enthaltend wenigstens in einer der Komponenten (1), (2) oder (3) eine wässrige Dispersion umfassend mindestens ein wie zuvor beschrieben hergestelltes Polymerisat SCS und wenigstens in einer der Komponenten (1), (2) oder (3) wenigstens einen aliphatischen Monoalkohol mit 5 Kohlenstoffatomen und/oder wenigstens einen aliphatischen Monoalkohol mit 6 Kohlenstoffatomen wird in der Folge auch als erfindungsgemäßes Mischsystem bezeichnet.

Das zuvor beschriebene Polymerisat SCS ist ein sog. Saat-Kern-Schale-Polymerisat, auch bekannt als Seed-Core-Shell Polymerisat.

Ebenfalls Gegenstand der vorliegenden Erfindung ist ein wässriges Reparaturbeschichtungsmittel hergestellt durch das Vermischen der Komponenten (1), (2) und (3) des erfindungsgemäßen Mischsystems sowie ein Verfahren zur Herstellung von Reparaturbeschichtungsmitteln unter Verwendung eines erfindungsgemäßen Mischsystems. Nicht zuletzt betrifft die vorliegende Erfindung die Verwendung des erfindungsgemäßen Mischsystems zur Herstellung von wässrigen Reparaturbeschichtungsmitteln für die Automobilreparaturlackierung.

## Ausführliche Beschreibung

Zunächst seien einige im Rahmen der vorliegenden Erfindung verwendeten Begriffe erläutert.

Der Begriff "enthaltend" im Sinne der vorliegenden Erfindung im Zusammenhang mit dem erfindungsgemäßen Mischsystem hat in einer bevorzugten Ausführungsform die Bedeutung "bestehend aus. Der Begriff "enthaltend" im Sinne der vorliegenden Erfindung im Zusammenhang mit der wässrigen Dispersion hat in einer bevorzugten Ausführungsform die Bedeutung "bestehend aus". Der Begriff enthaltend im Sinne der vorliegenden Erfindung im Zusammenhang mit dem wässrigen Reparaturbeschichtungsmittel hat in einer bevorzugten Ausführungsform die Bedeutung "bestehend aus". Der Begriff enthaltend im Sinne der vorliegenden Erfindung im Zusammenhang mit den Komponenten (1), (2) und (3) hat in einer bevorzugten Ausführungsform die Bedeutung "bestehend aus". Dabei können hinsichtlich des erfindungsgemäßen Mischsystems sowie der Komponenten (1), (2) und (3) in dieser bevorzugten Ausführungsform eine oder mehrere der weiter nachstehend genannten optional in dem Mischsystem bzw. in den Komponenten (1), (2) und (3) enthaltenen Komponenten in diesen enthalten sein. Selbiges gilt für das erfindungsgemäße wässrige Reparaturbeschichtungsmittel. Alle Komponenten können dabei jeweils in ihren nachstehend genannten bevorzugten Ausführungsformen in dem Mischsystem, in den Komponenten (1), (2) und (3) sowie im wässrigen Reparaturbeschichtungsmittel enthalten sein.

Unter wässrig in Bezug auf die wässrigen Reparaturbeschichtungsmittel und die wässrigen Dispersionen ist ein Beschichtungsmittel bzw. eine Dispersion zu verstehen, die einen signifikanten Anteil Wasser enthält. Bevorzugt ist "wässrig" in diesem Zusammenhang im Rahmen der vorliegenden Erfindung so zu verstehen, dass das Beschichtungsmittel bzw. die Dispersion einen Anteil von mindestens 40 Gew.-%, bevorzugt mindestens 50 Gew.-%, ganz besonders bevorzugt mindestens 60 Gew.-% Wasser, jeweils bezogen auf die Gesamtmenge der enthaltenen Lösemittel (das heißt Wasser und organische Lösemittel), aufweist. Besonders bevorzugt beträgt der Anteil an Wasser 40 bis 99 Gew.-%, insbesondere 50 bis 98 Gew.-%, ganz besonders bevorzugt 60 bis 95 Gew.-%, jeweils bezogen auf die Gesamtmenge der enthaltenen Lösemittel.

Der Begriff (Meth)acrylat soll im Folgenden sowohl Acrylat als auch Methacrylat bezeichnen.

Für Normen, beispielsweise DIN-Normen, für die keine Version bzw. kein Erscheinungsjahr explizit angegeben ist, gilt die am Einreichungstag gültige Version, oder sofern am Einreichungstag keine gültige Version existiert, die letzte gültige Version der Norm.

Die im Rahmen der vorliegenden Erfindung anzuwendenden Messmethoden zur Bestimmung bestimmter Kenngrößen sind dem Beispielteil zu entnehmen. Sofern nicht explizit anders angegeben, sind diese Messmethoden zur Bestimmung der jeweiligen Kenngröße einzusetzen.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile ohne Pigmente und Füllstoffe verstanden. Der nicht-flüchtige Anteil kann gemäß DIN EN ISO 3251 (Datum: 1.6.2008) bestimmt werden. Insbesondere werden unter dem Begriff "Bindemittel" die für die Filmbildung verantwortlichen in den jeweiligen Beschichtungsstoffen enthaltenen insbesondere polymeren Harze verstanden. Vom Begriff des "Bindemittels" sind vorzugsweise auch gegebenenfalls in dem jeweiligen Beschichtungsstoff vorhandene Vernetzungsmittel umfasst.

Im Rahmen der vorliegenden Erfindung ist unter dem Begriff der "Härtung" eines Beschichtungsmittels auf einem Substrat die Überführung der auf dem Substrat applizierten Beschichtungsmittelschicht in den gebrauchsfertigen

Zustand zu verstehen, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Bekanntermaßen können Beschichtungsmittel grundsätzlich physikalisch und/oder chemisch gehärtet werden, je nach enthaltenen Komponenten wie Bindemitteln und Vernetzungsmitteln. Bei der chemischen Härtung kommen die thermisch-chemische Härtung und die aktinisch-chemische Härtung in Betracht. Ein Beschichtungsmittel kann, beispielsweise sofern es thermisch-chemisch härtbar ist, selbst- und/oder fremdvernetzend sein. Unter der Angabe, dass ein Beschichtungsmittel selbst- und/oder fremdvernetzend ist, ist im Rahmen der vorliegenden Erfindung zu verstehen, dass dieses Beschichtungsmittel Polymere als Bindemittel und gegebenenfalls Vernetzungsmittel enthält, die entsprechend miteinander vernetzen können. Die zugrunde liegenden Mechanismen sowie einsetzbaren Bindemittel und Vernetzungsmittel (filmbildende Komponenten) werden weiter unten beschrieben. In diesem Zusammenhang wird auch auf das Römpp Chemie Lexikon, Lacke und Druckfarben, Georg Thieme Verlag, 1998, S. 274 verwiesen.

Im Rahmen der vorliegenden Erfindung bedeutet "physikalisch härtbar" (auch bekannt als physikalisch trocknend) beziehungsweise der Begriff "physikalische Härtung" die Bildung einer gehärteten Beschichtungsschicht durch Abgabe von Lösemittel aus Polymerlösungen oder Polymerdispersionen, wobei die Härtung durch eine Verschlaufung von Polymerketten erreicht wird. Solche Beschichtungsmittel werden in der Regel als Einkomponenten-Beschichtungsmittel formuliert.

Im Rahmen der vorliegenden Erfindung bedeutet "thermisch-chemisch härtbar" beziehungsweise der Begriff "thermisch-chemische Härtung" die durch chemische Reaktion von reaktiven funktionellen Gruppen initiierte Vernetzung einer Lackschicht (Bildung einer gehärteten Beschichtungsschicht), wobei die energetische Aktivierung dieser chemischen Reaktion durch thermische Energie möglich ist, aber nicht zwingend erforderlich ist. Dabei können unterschiedliche funktionelle Gruppen, die zueinander komplementär sind, miteinander reagieren (komplementäre funktionelle Gruppen) und/oder die Bildung der gehärteten Schicht beruht auf der Reaktion von autoreaktiven Gruppen, das heißt also funktionellen Gruppen, die untereinander mit Gruppen ihrer Art reagieren.

Bei dieser Vernetzung kann es sich um eine Selbstvernetzung und/oder eine Fremdvernetzung handeln. Sind beispielsweise die komplementären reaktiven funktionellen Gruppen bereits in einem als Bindemittel eingesetzten organischen Polymer, beispielsweise einem Polyester, einem Polyurethan oder einen Poly(meth)acrylat vorhanden, liegt eine Selbstvernetzung vor. Eine Fremdvernetzung liegt beispielsweise vor, wenn ein (erstes) organisches Polymer enthaltend bestimmte funktionelle Gruppen, beispielsweise Hydroxylgruppen, mit einem an sich bekannten Vernetzungsmittel, beispielsweise einem Polyisocyanat und/oder einem Melaminharz, reagiert. Das Vernetzungsmittel enthält also reaktive funktionelle Gruppen, die zu den in dem als Bindemittel eingesetzten (ersten) organischen Polymer vorhandenen reaktiven funktionellen Gruppen komplementär sind.

Insbesondere im Fall der Fremdvernetzung kommen die an sich bekannten Einkomponenten- und Mehrkomponentensysteme, insbesondere Zweikomponentensysteme in Betracht.

In thermisch-chemisch härtbaren Einkomponenten-Systemen liegen die zu vernetzenden Komponenten, beispielsweise organische Polymere als Bindemittel und Vernetzungsmittel, nebeneinander, das heißt in einer Komponente, vor. Voraussetzung hierfür ist, dass die zu vernetzenden Komponenten erst bei höheren Temperaturen von beispielsweise über 100°C effektiv miteinander reagieren, das heißt Härtungsreaktionen eingehen. Andernfalls müssten die zu vernetzenden Komponenten getrennt voneinander gelagert werden und erst kurz vor dem Aufbringen auf ein Substrat miteinander vermischt werden, um eine vorzeitige zumindest anteilige thermisch-chemische Härtung zu vermeiden (vergleiche Zweikomponenten-Systeme). Als beispielhafte Kombination seien hydroxyfunktionelle Polyester und/oder Polyurethane mit Melaminharzen und/oder blockierten Polyisocyanaten als Vernetzungsmittel genannt.

In thermisch-chemisch härtbaren Zweikomponenten-Systemen liegen die zu vernetzenden Komponenten, beispielsweise die organischen Polymere als Bindemittel und die Vernetzungsmittel, getrennt voneinander in mindestens zwei Komponenten vor, die erst kurz vor der Applikation zusammengegeben werden. Diese Form wird dann gewählt, wenn die zu vernetzenden Komponenten bereits bei Umgebungstemperaturen oder leicht erhöhten Temperaturen von beispielsweise 40 bis 90°C effektiv miteinander reagieren. Als beispielhafte Kombination seien hydroxyfunktionelle Polyester und/oder Polyurethane und/oder Poly(meth)acrylate mit freien Polyisocyanaten als Vernetzungsmittel genannt.

Es ist auch möglich, dass ein organisches Polymer als Bindemittel sowohl selbstvernetzende als auch fremdvernetzende funktionelle Gruppen aufweist und dann mit Vernetzungsmitteln kombiniert wird.

Im Rahmen der vorliegenden Erfindung ist unter "aktinisch-chemisch härtbar" beziehungsweise dem Begriff "aktinisch-chemische Härtung" die Tatsache zu verstehen, dass die Härtung unter Anwendung aktinischer Strahlung, nämlich elektromagnetischer Strahlung wie nahes infrarot (NIR) und UV-Strahlung, insbesondere UV-Strahlung, sowie Korpuskularstrahlung wie Elektronenstrahlung zur Härtung möglich ist. Die Härtung durch UV-Strahlung wird üblicherweise durch radikalische oder kationische Photoinitiatoren initiiert. Typische aktinisch härtbare funktionelle Gruppen sind Kohlenstoff-Kohlenstoff- Doppelbindungen, wobei hierbei in der Regel radikalische Photoinitiatoren zum Einsatz

kommen. Der aktinischen Härtung liegt also ebenfalls eine chemische Vernetzung zugrunde.

Selbstverständlich wird bei der Härtung eines als chemisch härtbar gekennzeichnetes Beschichtungsmittel immer auch eine physikalische Härtung, das heißt eine Verschlaufung von Polymerketten, auftreten. Die physikalische Härtung kann sogar den überwiegenden Anteil ausmachen. Trotzdem wird ein solches Beschichtungsmittel, sofern es zumindest anteilig filmbildende Komponenten enthält, die chemisch härtbar sind, als chemisch härtbar bezeichnet.

Aus Obigem folgt, dass je nach Art des Beschichtungsmittels und den darin enthaltenen Komponenten eine Härtung durch unterschiedliche Mechanismen bewirkt wird, die selbstverständlich auch unterschiedliche Bedingungen bei der Härtung notwendig machen, insbesondere unterschiedliche Härtungstemperaturen und Härtungsdauern.

Im Gegensatz zu Beschichtungsmitteln aus einer Serienlackierung härten Reparaturbeschichtungsmittel bei wesentlich geringeren Temperaturen. Dies ist notwendig, da kein Einbrennen der Beschichtungsmittel auf den Objekten erfolgen kann. Objekttemperaturen von 80 °C dürfen nicht überschritten werden, da sonst Schäden, wie das Schmelzen von Kunststoffteilen, die Verformung von Reifen und irreversible Schäden an der Elektrik, auftreten können.

Aus diesem Grund sind die aus dem erfindungsgemäßen Mischsystem hergestellten wässrigen Reparaturbeschichtungsmittel bevorzugt physikalisch und/oder aktinisch-chemisch härtbar, insbesondere bevorzugt physikalisch härtbar.

Mischsysteme zur Herstellung von Beschichtungsmitteln sind gerade im Bereich der Automobilreparaturlackierung weit verbreitet (vgl. beispielsweise Brock/Groteklaes/Mischke "Lehrbuch der Lacktechnologie, 2. Auflage, Vincentz Verlag 2000, S. 332 ff.), da aufgrund der Vielzahl der einzustellenden Eigenschaften, wie beispielsweise Farbtöne, entsprechende fertige Beschichtungsmittel nur schwer angeboten und bevorratet werden können. Somit hat sich vielmehr die Verwendung eines Mischsystems mit unterschiedlichen Komponenten bewährt, die je nach Anforderung an das Beschichtungsmittel individuell mit einander vermischt werden können. Gemäß dem Eintrag für den Begriff "Mischsystem" im Römpp Lexikon, Lacke und Druckfarben, Georg Thieme Verlag, 1998, S. 393-394 gehören entsprechende Mischsystem gerade im Bereich der Automobilreparaturlackierung zur regulären Ausrüstung. Die Mischsysteme enthalten üblicherweise unterschiedliche Basiskomponenten. Zu diesen Basiskomponenten zählen üblicherweise wenigstens ein sogenannter Stammlack, ein oder mehrere pigmentierte Basisfarben sowie wenigstens ein Rheologiemodul zur Einstellung der rheologischen Eigenschaften des aus dem Mischsystem hergestellten Beschichtungsmittels. Wie der Fachmann weiß sind Mischsysteme im Bereich der Automobilreparaturlackierung zu unterscheiden von klassischen Rezepturen wie sie beispielsweise zur Herstellung von Basislacken für die OEM-Lackierung verwendet werden.

Beim sogenannten Stammlack handelt es sich üblicherweise um eine pigmentfreie Zusammensetzung enthaltend mindestens ein physikalisch härtendes und/oder ein selbstvernetzendes und/oder ein fremdvernetzendes Bindemittel aufweisen. Im Fall eines fremdvernetzenden Bindemittels ist für die Härtung des Beschichtungsmittels die ggf. Zumischung eines Vernetzers erforderlich.

Die sogenannten Basisfarben enthalten üblicherweise neben mindestens einem physikalisch härtenden und/oder einem selbstvernetzenden und/oder einem fremdvernetzendes Bindemittel wenigstens ein farbgebendes und/oder optisch effektgebendes Pigment. Durch die Mischung unterschiedlicher Basisfarben mit dem Stammlack lassen sich Beschichtungsmittel mit den unterschiedlichsten Eigenschaften herstellen. Dazu zählt u.a. unterschiedliche Farbtöne und/oder unterschiedlich stark ausgeprägte optische Effekte, wie beispielswiese der Farb-Flop oder der metallische Flop einer Beschichtung.

Zur Einstellung der rheologischen Eigenschaften des aus dem Mischsystem resultierenden Beschichtungsmittels, wird üblicherweise eine rheolgiesteuernde Zusammensetzung verwendet, welche mindestens einen anorganischen und/oder organischen Verdicker enthält.

**Das Mischsystem**

Das erfindungsgemäße Mischsystem zur Herstellung eines wässrigen Reparaturbeschichtungsmittels enthält wenigstens eine Komponente (1) als pigmentfreien Stammlack enthaltend mindestens ein physikalisch härtendes Polyurethan oder ein selbstvernetzendes Polyurethan oder ein fremdvernetzendes Polyurethan, wenigstens eine Komponente (2) als Basisfarbe enthaltend mindestens ein physikalisch härtendes Polyurethan oder ein selbstvernetzendes Polyurethan oder ein fremdvernetzendes Polyurethan und mindestens ein farbgebendes und/oder optisch effektgebendes Pigment sowie wenigstens eine Komponente (3) als Rheologiemodul enthaltend mindestens einen anorganischen und/oder organischen Verdicker, welche nachfolgend näher beschrieben werden.

Es ist dabei erfindungswesentlich, dass wenigstens eine der Komponenten (1), (2) oder (3) eine wässrige Dispersion enthaltend wenigstens ein Polymerisat SCS umfasst und wenigstens eine der Komponente (1), (2) oder (3) wenigstens einen aliphatischen Monoalkohol mit 5 Kohlenstoffatomen und/oder wenigstens einen aliphatischen Monoalkohol mit 6 Kohlenstoffatomen umfasst. Vorzugsweise enthält wenigstens eine der Komponenten (1), (2) oder (3) sowohl die wässrige Dispersion enthaltend wenigstens ein Polymerisat SCS als auch den wenigstens einen aliphatischen Monoalkohol mit 5 Kohlenstoffatomen und/oder den wenigstens einen aliphatischen Monoalkohol mit 6 Kohlenstoffatomen.

Es besteht allerdings prinzipiell auch die Möglichkeit, dass zwei oder sogar alle drei Komponenten (1), (2) und (3) wenigstens eine wässrige Dispersion enthaltend mindestens ein Polymerisat SCS umfassen. Selbiges gilt für den wenigstens einen aliphatischen Monoalkohol mit 5 Kohlenstoffatomen und/oder den wenigstens einen aliphatischen Monoalkohol mit 6 Kohlenstoffatome.

*Die Komponente (1) - Stammlack*

Das erfindungsgemäße Mischsystem enthält wenigstens eine Komponente (1) als pigmentfreien Stammlack enthaltend mindestens ein physikalisch härtendes Polyurethan oder ein selbstvernetzendes Polyurethan oder ein fremdvernetzendes Polyurethan.

Beispiele geeigneter Polyurethane für den Einsatz in der Komponente (1) werden nachfolgend dargestellt. Bevorzugt ist das enthaltene Polyurethan ionisch und/oder nicht ionisch hydrophil stabilisiert sein. In bevorzugten Ausführungsformen der vorliegenden Erfindung ist das Polyurethan ionisch hydrophil stabilisiert. Die bevorzugten Polyurethane sind linear oder enthalten Verzweigungen. Es kann sich auch um ein Polyurethan handeln, in dessen Gegenwart olefinisch ungesättigte Monomere polymerisiert wurden. Das Polyurethan kann dabei neben dem aus der Polymerisation der olefinisch ungesättigten Monomere hervorgegangenen Polymer vorliegen ohne dass diese kovalent miteinander verbunden sind. Ebenso kann das Polyurethan aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethan gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch und/oder mit aktinischer Strahlung härtbar.

Geeignete gesättigte oder ungesättigte Polyurethanharze werden beispielsweise beschrieben in

- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.
- der deutschen Patentanmeldung DE 4437535 A1, Seite 7, Zeile 55 bis Seite 8, Zeile 23
- der internationalen Patentanmeldung WO 91/15528 Seite 23, Zeile 29 bis Seite 24, Zeile 24.

Für die Herstellung des Polyurethans der Komponente (1) werden vorzugsweise die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt.

Als Alkohol-Komponente für die Herstellung der Polyurethane werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol bestimmt mittels GPC eingesetzt.

Zur hydrophilen Stabilisierung beziehungsweise zur Erhöhung der Dispergierbarkeit in wässrigem Medium kann das Polyurethanharz vorzugsweise bestimmte ionische Gruppen und/oder Gruppen, die in ionische Gruppen überführt werden können (potentiell ionische Gruppen), enthalten. Solche Polyurethane werden im Rahmen der vorliegenden Erfindung als ionisch hydrophil stabilisierte Polyurethane bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um

- funktionelle Gruppen, die durch Neutralisationsmittel und/oder Quaternisierungsmittel in Kationen überführt werden können, und/oder kationische Gruppen (kationische Modifizierung)
oder
- funktionelle Gruppen, die durch Neutralisationsmittel in Anionen überführt werden können, und/oder anionische Gruppen (anionische Modifizierung)
und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethan eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Es ist auch möglich, dass es sich bei dem Polyurethan der Komponente (1) um ein Pfropfpolymer handelt. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppen-haltigen Monomeren eingesetzt.

Die beschriebenen Seitenketten werden bevorzugt nach der Herstellung einer Polyurethan-Primärdispersion in das Polymer eingeführt. In diesem Fall kann das in der Primärdispersion vorliegende Polyurethan Seiten- und/oder endständige olefinisch ungesättigte Gruppen enthalten, über die dann die Pfropfpolymerisation mit den olefinisch ungesättigten Verbindungen verläuft. Das zu pfropfende Polyurethan kann also ein ungesättigtes Polyurethan (Z) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethans erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethans statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethane.

Als olefinisch ungesättigte Verbindungen, mit denen das Polyurethan (Z) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:

- Hydroxyalkylester der (Meth)acrylsäure oder anderer alpha, beta -ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, so dass das es sich bei den aufgepfropften Seitenketten um Poly(meth)acrylat-basierende Seitenketten handelt.

Die Seiten- und/oder endständigen olefinisch ungesättigten Gruppen in dem Polyurethan, über die die Pfropfpolymerisation mit den olefinisch ungesättigten Verbindungen verlaufen kann, werden bevorzugt über bestimmte Monomere in das Polyurethan eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethan danach noch zusätzlich mit olefinisch ungesättigten Verbindungen gepfropft wird.

Die Herstellung des Polyurethanharzes erfolgt nach den üblichen Methoden der Polymerchemie. Gemeint sind dabei beispielsweise die Polyaddition von Polyisocyanaten und Polyolen zu Polyurethanen und ggf. die dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Das bevorzugt enthaltene Polyurethan besitzt vorzugsweise ein zahlenmittleres Molekulargewicht von 200 bis 30000 g/mol, bevorzugt von 2000 bis 20000 g/mol bestimmt mittels GPC. Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g.

*Die Komponente (2) - Die Basisfarbe*

Das erfindungsgemäße Mischsystem enthält wenigstens eine Komponente (2) als Basisfarbe enthaltend mindestens ein physikalisch härtendes Polyurethan oder ein selbstvernetzendes Polyurethan oder ein fremdvernetzendes Polyurethan. Ferner enthält die Komponente (2) enthält wenigstens ein farbgebendes und/oder optisch effektgebendes Pigment.

In Bezug auf das mindestens ein physikalisch härtendes Polyurethan oder ein selbstvernetzendes Polyurethan oder ein fremdvernetzendes Polyurethan gilt das für die Komponente (1) Ausgeführte.

Der Begriff "Pigment" ist dem Fachmann bekannt, beispielsweise aus der DIN 55945 (Datum: Oktober 2001). Unter einem "Pigment" werden im Sinne der vorliegenden Erfindung vorzugsweise pulver- oder plättchenförmige Verbindungen verstanden, die in dem sie umgebenden Medium, wie beispielsweise in der Komponente (2), im Wesentlichen, vorzugsweise vollständig, unlöslich sind. Bei diesen Substanzen handelt es sich vorzugsweise um Farbmittel und/oder um Substanzen, die aufgrund ihrer magnetischen, elektrischen und/oder elektromagnetischen Eigenschaften als Pigment eingesetzt werden können. Von "Füllstoffen" unterscheiden sich Pigmente vorzugsweise durch ihren Brechungsindex, der für Pigmente $\geq 1{,}7$ beträgt.

Das Pigment ist vorzugsweise ausgewählt aus der Gruppe bestehend aus anorganischen und organischen farbgebenden Pigmenten, Effektpigmenten sowie Mischungen davon.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Weitere anorganische farbgebende Pigmente sind Siliziumdioxid, Aluminiumoxid, Aluminiumoxidhydrat, insbesondere Böhmit, Zirkoniumoxid, Ceroxid und Mischungen hiervon.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente,

Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ein Fachmann ist mit dem Begriff der Effektpigmente vertraut. Insbesondere handelt es sich bei Effektpigmenten um solche Pigmente sind, die optisch effektgebend sind und beispielsweise somit für den Metalliceffekt einer Beschichtung hervorrufen. Eine entsprechende Einteilung der Pigmente kann nach DIN 55944 (Datum: Dezember 2011) erfolgen. Vorzugsweise werden die Effektpigmente aus der Gruppe bestehend aus organischen und anorganischen, optisch effektgebenden, farb- und optisch effektgebenden, Pigmenten, ausgewählt. Bevorzugt werden sie aus der Gruppe bestehend aus organischen und anorganischen, optisch effektgebenden oder farb- und optisch effektgebenden Pigmenten, ausgewählt. Insbesondere werden die organischen und anorganischen, optisch effektgebenden und farb- und optisch effektgebenden Pigmente aus der Gruppe bestehend aus gegebenenfalls beschichteten Metalleffektpigmenten, aus gegebenenfalls beschichteten Metalloxideffektpigmenten, aus gegebenenfalls beschichteten Metallen und Nichtmetallen zusammengesetzten Effektpigmenten und gegebenenfalls beschichteten nichtmetallischen Effektpigmenten ausgewählt. Insbesondere sind die gegebenenfalls beschichteten wie z.B. silikatbeschichteten Metalleffektpigmente Aluminiumeffektpigmente, Eiseneffektpigmente oder Kupfereffektpigmente. Ganz besonders bevorzugt sind gegebenenfalls beschichtete wie z.B. silikatbeschichtete Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan. Die erfindungsgemäß eingesetzten Effektpigmente, insbesondere gegebenenfalls beschichtete wie z.B. silikatbeschichteten Aluminiumeffektpigmente, können in jeder üblichen dem Fachmann bekannten Form wie z.B. einer Blättchen- und/oder einer Plättchenform, insbesondere einer (Corn)flake- oder einer Silverdollar-Form vorliegen. Insbesondere sind die aus Metallen und Nichtmetallen zusammengesetzten Effektpigmente mit Eisenoxid beschichtete plättchenförmige Aluminiumpigmente, wie sie beispielsweise in der europäischen Patentanmeldung EP 0 562 329 A2 beschrieben werden; Glasblättchen, die mit Metallen, insbesondere Aluminium, beschichtet sind; oder Interferenzpigmente, die eine Reflektorschicht aus Metall, insbesondere Aluminium, enthalten und einen starken Farbflop aufweisen. Insbesondere sind die nichtmetallischen Effektpigmente Perlglanzpigmente, insbesondere Micapigmente; mit Metalloxiden beschichtete, plättchenförmige Graphitpigmente; Interferenzpigmente, die keine Reflektorschicht aus Metall enthalten und einen starken Farbflop aufweisen; plättchenförmige Effektpigmente auf der Basis von Eisenoxid, die einen Farbton von Rosa bis Braunrot aufweisen; oder organische, flüssigkristalline Effektpigmente. Ergänzend wird hinsichtlich der erfindungsgemäß eingesetzten Effektpigmente auf Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Es ist bevorzugt, dass das erfindungsmäße Mischsystem mehr als eine voneinander verschiedene Komponente (2) als Basisfarben enthält.

*Die Komponente (3) - Das Rheologiemodul*

Das erfindungsgemäße Mischsystem enthält wenigstens eine Komponente (3) als sogenanntes Rheologiemodul, welches mindestens einen anorganischen und/oder organischen Verdicker enthält.

Der Begriff eines Verdickers ist dem Fachmann geläufig. Gemäß der Definition im Römpp Lexikon, Lacke und Druckfarben, Georg Thieme Verlag, 1998, S. 599 werden Verdicker (oder Verdickungsmittel) benötigt, um ergänzend zur Auswahl des Bindemittels, des Lösemittel(gemischs) und des Pigment/Füllstoffanteils die Konsistenz eines Beschichtungsmittels zu erhöhen. Die Wirkung des Verdickers beruht dabei auf verschiedenen Effekten, wie beispielswiese Quellung, Gelbildung, Assoziation von Micellen, Solvatation, Ausbildung von Netzwerkstrukturen und/oder Wasserstoffbrückenbindungen sowie deren Zusammenspiel.

Anorganische Verdicker werden vorzugsweise gewählt aus der Klasse der amorphen Kieselsäuren und der Schichsilikate in ihrer reinen Form oder modifiziert. Im Rahmen der vorliegenden Erfindung kommt bevorzugt mindestens ein anorganischer Verdicker gewählt aus der Gruppe der Schichtsilikate zum Einsatz. Insbesondere eignen sich Schichtsilikate der Untergruppe der Smektite, insbesondere mit den Untergruppen Montmorillonit, Hektorit und dem synthetischen Laponit. Ein typischer Vertreter der anorganischen Verdicker ist ein unter dem Handelsnamen Laponite® RD erhältliches Natrium-Magnesium-Schichtsilikat.

Die organischen Verdicker werden vorzugsweise gewählt aus der Gruppe bestehend aus (Meth)acrylsäure-(Meth)acrylat-Copolymerisat-Verdickern, wie beispielsweise dem Handelsprodukt Rheovis® AS 1130 (BASF SE) und Polyurethanverdickern, wie beispielsweise dem Handelsprodukt Rheovis® PU1250 der Firma BASF SE. Als (Meth)acrylsäure-(Meth)acrylat-Copolymerisat-Verdicker werden solche bezeichnet, die neben Acrylsäure und/oder Methacrylsäure auch ein oder mehrere Acrylsäureester (das heißt Acrylate) und/oder ein oder mehrere Methacrylsäureester (das heißt Methacrylate) einpolymerisiert enthalten. Den (Meth)acrylsäure-(Meth)acrylat-Copolymerisat-Verdickern gemein ist, dass diese in alkalischem Medium, das heißt bei pH-Werten > 7, insbesondere > 7,5 durch Salzbildung der Acrylsäure und/oder Methacrylsäure, das heißt durch die Bildung von Carboxylatgruppen einen starken Viskositätsanstieg zeigen. Werden (Meth)acrylsäureester eingesetzt, die aus (Meth)acrylsäure und einem $C_1$-$C_6$-Alkanol gebildet

werden, so erhält man im wesentlichen nicht-assoziativ wirkende (Meth)acrylsäure-(Meth)acrylat-Copolymerisat-Verdicker, wie beispielsweise das oben genannte Rheovis® AS 1130. Im Wesentlichen nicht-assoziativ wirkende (Meth)acrylsäure-(Meth)acrylat-Copolymerisat-Verdicker werden in der Literatur auch als ASE-Verdicker ("Alkali Soluble/Swellable Emulsion", alkalisch lösliche/quellbare Emulsion oder Dispersion) bezeichnet. Als (Meth)acrylsäure-(Meth)acrylatCopolymerisat-Verdicker sind jedoch auch sogenannte HASE-Verdicker ("Hydrophobically Modified Anionic Soluble Emulsions", hydrophob modifizierte anionisch lösliche Emulsion oder Dispersion) einsetzbar. Diese werden erhalten, wenn als Alkanol anstelle oder zusätzlich zu den $C_1$-$C_6$-Alkanolen solche mit einer größeren Anzahl an Kohlenstoffatomen, beispielsweise 7 bis 30, oder 8 bis 20 Kohlenstoffatomen eingesetzt werden. HASE-Verdicker wirken im Wesentlichen assoziativ verdickend. Die einsetzbaren (Meth)acrylsäure-(Meth)acrylatCopolymerisat-Verdicker eignen sich aufgrund ihrer verdickenden Eigenschaften nicht als Bindemittel-Harze, sie fallen somit nicht unter die als Bindemittel bezeichneten physikalisch, thermisch oder thermisch und aktinisch härtbaren Bindemitteln und sind somit explizit verschieden von den Poly(meth)acrylat basierten Bindemitteln, die in der Komponente (3) eingesetzt werden können. Als Polyurethanverdicker sind die in der Literatur als HEUR ("Hydrophobically Modified Ethylene Oxide Urethane Rheology Modifiers", hydrophob modifizierte Ethylenoxid-Urethan-Rheologieadditive) bezeichneten, assoziativ wirkenden Verdicker zu verstehen. Chemisch handelt es sich hierbei um nichtionische verzweigte oder unverzweigte Blockcopolymere aus Polyethylenoxid-Ketten (manchmal auch Polypropylenoxid-Ketten), die über Urethanbindungen miteinander verknüpft sind und die endständige langkettige Alkyl- oder Alkylengruppen mit 8 bis 30 Kohlenstoffatomen tragen.

Typische Alkylgruppen sind beispielsweise Dodecyl- oder Stearyl-Gruppen, eine typische Alkenylgruppe ist beispielsweise eine Oleylgruppe, eine typische Arylgruppe ist die Phenylgruppe und eine typische alkylierte Arylgruppe ist beispielsweise eine Nonylphenylgruppe. Die Polyurethan-Verdicker eignen sich aufgrund ihrer verdickenden Eigenschaften und Struktur nicht als physikalisch, thermisch oder thermisch und physikalisch härtbare Bindemittel-Harze. Sie sind somit explizit verschieden von den Polyurethanen, die in den Komponenten (1) und (2) als Bindemittel eingesetzt werden.

*Optionale Komponenten*

Die Komponenten (1), (2) und/oder (3) können weitere Zusatzstoffe als optionale Komponenten enthalten. Dabei ist zu beachten, dass diese entsprechenden Zusatzstoffe in den Komponenten (1), (2) und/oder (3) jeweils technisch sinnvoll eingesetzt werden und dass sich durch den Einsatz keine Widersprüche für die Komponenten (1), (2) und/oder (3) ergeben. Dies bedeutet beispielsweise für den Fachmann, dass der pigmentfreien Komponente (1) keine Pigmente als optionaler Zusatzstoff hinzugefügt werden darf. Ferner ist es dem Fachmann bekannt, dass den Basisfarben häufig zur verbesserten Dispergierbarkeit der eingesetzten Pigmente Dispergiermittel zugesetzt werden.

Beispiele für derartige Zusatzstoffe sind rückstandsfrei oder im Wesentlichen rückstandsfrei thermisch zersetzbare Salze, von den vorgenannten Polyurethanharzen verschiedene physikalisch, thermisch und/oder mit aktinischer Strahlung härtbare Harze als Bindemittel, Vernetzungsmittel, organische Lösemittel, Reaktivverdünner, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus

- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033], bekannt. Sie werden in den üblichen und bekannten Mengen eingesetzt.

*Die wässrige Dispersion*

Die im erfindungsgemäßen Mischsystem enthaltende wässrige Dispersion enthält mindestens ein Polymerisat SCS. Bevorzugt enthält eine Dispersion genau ein solches Polymerisat. Die Herstellung des Polymerisats umfasst die aufeinanderfolgende radikalische Emulsionspolymerisation von drei voneinander verschiedener Monomerenmischungen (A), (B) und (C) von olefinisch ungesättigten Monomeren.

Bei der Herstellung des mehrstufigen Polymerisats SCS handelt es sich um eine mehrstufige radikalische Emulsionspolymerisation, wobei i. zunächst die Mischung (A) polymerisiert wird, dann ii. in Anwesenheit des unter i. hergestellten Polymerisats die Mischung (B) polymerisiert wird und weiterhin iii. in Anwesenheit des unter ii. hergestellten Polymerisats die Mischung (C) polymerisiert wird. Alle drei Monomermischungen werden also über eine jeweils separat durchgeführte radikalische Emulsionspolymerisation (das heißt Stufe oder auch Polymerisationsstufe) polymerisiert, wobei diese Stufen aufeinanderfolgend stattfinden. Die Stufen können, zeitlich betrachtet, direkt hintereinander stattfinden. Möglich ist es genauso, dass nach Abschluss einer Stufe die entsprechende Reaktionslösung für eine gewisse

Zeitspanne gelagert und/oder in ein anderes Reaktionsgefäß überführt wird und erst dann die nächste Stufe stattfindet. Bevorzugt umfasst die Herstellung des speziellen mehrstufigen Polymerisats neben der Polymerisation der Monomerenmischungen (A), (B) und (C) keine weiteren Polymerisationsschritte.

Der Begriff der radikalischen Emulsionspolymerisation ist dem Fachmann bekannt und wird zudem in der Folge nochmals genauer erläutert.

Bei einer solchen Polymerisation werden olefinisch ungesättigten Monomere in wässrigem Medium unter Einsatz von mindestens einem wasserlöslichen Initiator und in Anwesenheit mindestens eines Emulgators polymerisiert.

Entsprechende wasserlösliche Initiatoren sind ebenfalls bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo-bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Ebenfalls der genannten bevorzugten Gruppe zugehörig sind die an sich bekannten Redox-Initiatorsyteme.

Unter Redox-Initiatorsystemen sind insbesondere solche Initiatoren zu verstehen, die mindestens eine peroxidhaltige Verbindung in Kombination mit mindestens einem Redox- Coinitiator, beispielsweise reduzierend wirkenden Schwefelverbindungen wie beispielsweise Bisulfiten, Sulfiten, Thiosulfaten, Dithioniten oder Tetrathionaten von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, beispielsweise Ammoniumperoxidisulfat und Ammoniumdisulfit. Das Gewichtsverhältnis von peroxidhaltigen Verbindungen zu den Redox-Coinitiatoren beträgt vorzugsweise 50:1 bis 0,05:1.

In Kombination mit den Initiatoren können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer-I-chlorid, Mangan-II-acetat, Vanadium-III-acetat, Mangan-II-chlorid. Bezogen auf die Gesamtmasse der bei einer Polymerisation eingesetzten olefinisch ungesättigten Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30 Gew.-% Wasserstoffperoxid und 0,1 bis 500 ppm Mohrsches Salz, wobei die Anteilsbereiche jeweils bezogen auf das Gesamtgewicht der in der jeweiligen Polymerisationsstufe eingesetzten Monomere sind.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, das Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Neben den Monomeren, dem mindestens einen wasserlöslichen Initiator und dem mindestens einen Emulgator besteht die Reaktionsmischung also hauptsächlich aus Wasser. Bevorzugt machen die genannten Komponenten, das heißt Monomere, wasserlöslicher Initiator, Emulgator und Wasser, mindestens 95 Gew.-% der Reaktionsmischung aus. Bevorzugt besteht die Reaktionsmischung aus diesen Komponenten.

Der mindestens eine Emulgator wird bevorzugt in einer Menge von 0,1-10 Gew.-%, besonders bevorzugt 0,1-5 Gew.-%, ganz besonders bevorzugt 0,1-3 Gew.-%, jeweils bezogen auf das Gesamtgewicht der in der jeweiligen Polymerisationsstufe eingesetzten Monomere, eingesetzt.

Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden.

Bevorzugte Emulgatoren sind Alkanole mit 10 bis 40 Kohlenstoffatomen, welche gegebenenfalls ethoxyliert und/oder propoxyliert sein können. Sie können unterschiedliche Ethoxylierungs- beziehungsweise Propoxylierungsgrade aufweisen (beispielsweise Addukte, die mit aus 5 bis 50 Moleküleinheiten bestehenden Poly(oxy)ethylen- und/oder Poly(oxy)propylenketten modifiziert sind). Es können auch sulfatierte, sulfonierte oder phosphatierte Derivate der genannten Produkte eingesetzt werden. Solche Derivate werden in der Regel in neutralisierter Form eingesetzt.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa.Cytec.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt.

Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, die oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des mehrstufigen Polymerisats können beispielsweise

als sogenannte "verhungernde Polymerisationen" (auch als "starve feed", "starve fed" oder "starved feed"-Polymerisationen bekannt) durchgeführt werden.

Als verhungernde Polymerisation im Sinne der vorliegenden Erfindung wird eine Emulsionspolymerisation angesehen, bei der der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%. Beispielsweise kann der höchste während der Reaktion zu detektierende Gewichtsanteil bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Die Gesamtmenge (auch genannt Gesamtgewicht) der in der jeweiligen Polymerisationsstufe eingesetzten Monomere entspricht für Stufe i. augenscheinlich der Gesamtmenge der Monomerenmischung (A), für Stufe ii. der Gesamtmenge der Monomerenmischung (B) und für Stufe iii. der Gesamtmenge der Monomerenmischung (C).

Die Konzentration der Monomere in der Reaktionslösung kann dabei beispielsweise gaschromatographisch bestimmt werden. Dabei wird eine Probe der Reaktionslösung nach Probenentnahme sofort mit flüssigem Stickstoff abgekühlt und mit 4-Methoxyphenol als Inhibitor versetzt. Im nächsten Schritt wird die Probe in Tetrahydrofuran gelöst und anschließend wird zur Ausfällung des zum Zeitpunkt der Probenentnahme entstandenen Polymerisats n-Pentan hinzugegeben. Dann wird die flüssige Phase (Überstand) gaschromatographisch untersucht, wobei eine polare und eine unpolare Säule zur Bestimmung der Monomere eingesetzt werden und ein Flammenionisationsdetektor verwendet wird. Typische Parameter für die gaschromatographische Bestimmung sind die folgenden: 25 m Silica-Kapillarsäule mit 5% Phenyl- ,1% Vinyl-Methylpolysiloxan- Phase oder 30 m Silica-Kapillarsäule mit 50% Phenyl 50% Methyl-polysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat. Die Messung wird üblicherweise nur mit einer vorgenannten Variante durchgeführt. Deren Auswahl sollte keinen Einfluss auf das Messergebnis haben. Es kann in einigen wenigen Fällen jedoch zu einer Signalüberlagerung kommen, so dass eine quantitative Auswertung nicht möglich ist. In diesem Fall wird die Messung mit der noch nicht verwendeten Variante wiederholt. Die Bestimmung der Konzentration der Monomere erfolgt im Rahmen der vorliegenden Erfindung bevorzugt gaschromatographisch, insbesondere unter Einhaltung der oben genannten Parameter.

Der Anteil der freien Monomere kann auf verschiedene Art und Weisen gesteuert werden.

Eine Möglichkeit den Anteil der freien Monomere gering zu halten ist es, die Dosiergeschwindigkeit der Mischung der olefinisch ungesättigten Monomere zur eigentlichen Reaktionslösung, in der die Monomere mit dem Initiator in Kontakt kommen, sehr niedrig zu wählen. Wenn die Zudosiergeschwindigkeit so niedrig ist, dass alle Monomere praktisch sofort reagieren können, wenn sie in der Reaktionslösung sind, kann sichergestellt werden, dass der Anteil der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Auf diese Weise ist ein weiteres Kettenwachstum des Polymerisats garantiert und der Anteil an freiem Monomer wird gering gehalten.

Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher.

Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Es ist bevorzugt eine Temperatur zu wählen, die einen konstanten Zerfall des Initiators ermöglicht.

Die Initiatormenge ist ebenfalls ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmt, ist die Reaktivität der Monomere.

Die Kontrolle des Anteils der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie oben beschrieben, bestimmt werden.

Sollte bei dieser Analyse eine Konzentration an freien Monomeren bestimmt werden, die nahe an den Grenzwert für die verhungernde Polymerisation kommt, beispielsweise aufgrund geringer Anteile von hoch reaktiven olefinisch ungesättigten Monomeren, können die oben genannten Parameter zur Steuerung der Reaktion genutzt werden. Es kann in diesem Fall beispielsweise die Dosiergeschwindigkeit der Monomere verringert oder die Menge an Initiator erhöht werden

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Momomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Momomermischung C weiterwachsen zu lassen (daher nachstehend auch Schale genannt), sodass schließlich ein Polymerisat umfassend Partikel enthaltend Saat, Kern und Schale resultiert.

Selbstverständlich kann auch die Stufe i. unter verhungernden Bedingungen durchgeführt werden.

Bei den Mischungen (A), (B) und (C) handelt es sich um Mischungen von olefinisch ungesättigten Monomeren. Im Rahmen dieser Erfindung wird jeweils zwischen den Monomerenmischungen (A), (B) und (C) sowie den entsprechenden Monomerenmischungen enthaltend optional mindestens ein wenigstens eine olefinisch ungesättigte Gruppe aufweisendes Polyurethan differenziert. Die Monomerenmischungen (A), (B) und (C) bzw. die aus diesen Monomerenmischungen hergestellten Polymerisate (a), (b) und (c) weisen vor Zumischung des Polyurethans (P) die nachfolgend beschriebenen Charakteristika auf.

Es ist bevorzugt, dass die Monomerenmischungen (A), (B) und (C) bis auf die optionale Zumischung des Polyurethans (P) keine Macromonomere enthalten. Der Begriff des Makromonomers ist dem Fachmann bekannt. Hierbei handelt es sich um Polymere oder Oligomere, welche eine reaktive funktionelle Gruppe aufweisen und als Monomer fungieren. Dies führt dazu, dass über das Makromonomer eine polymere oder oligomere Seitenkette in das Zielpolymer eingeführt wird.

Prinzipiell geeignete olefinisch ungesättigte Monomere können einfach oder mehrfach olefinisch ungesättigt sein.

In der Folge werden zunächst grundsätzlich einsetzbare und im Rahmen aller Mischungen (A), (B) und (C) geeignete und gegebenenfalls bevorzugte Monomere beschrieben. Auf spezifische bevorzugte Ausführungsformen der einzelnen Mischungen wird danach eingegangen. Es ist bevorzugt, dass die Mischungen (A), (B) und (C) jeweils aus den entsprechend nachfolgend beschriebenen Monomeren bestehen.

Beispiele geeigneter einfach olefinisch ungesättigter Monomere umfassen insbesondere (meth)acrylat-basierte einfach olefinisch ungesättigte Monomere, Allylgruppen-haltige einfach olefinisch ungesättigte Monomere und weitere Vinylgruppen-haltige einfach olefinisch ungesättigte Monomere wie beispielsweise vinylaromatische Monomere. Der Begriff (meth)acryl beziehungsweise (Meth)acrylat umfasst im Rahmen der vorliegenden Erfindung sowohl Methacrylate als auch Acrylate. Bevorzugt werden jedenfalls, aber nicht zwingend ausschließlich, (meth)acrylat-basierte einfach olefinisch ungesättigte Monomere eingesetzt

Bei den (meth)acrylat-basierten, einfach olefinisch ungesättigten Monomeren kann es sich beispielsweise um (Meth)acrylsäure und Ester, Nitrile oder Amide der (Meth)acrylsäure handeln.

Bevorzugt sind Ester der (Meth)acrylsäure, mit einem Rest R, der nicht olefinisch ungesättigt ist.

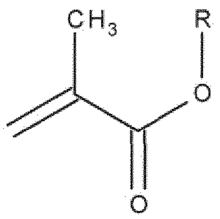

bzw.

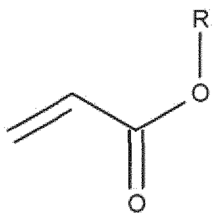

Der Rest R kann gesättigt-aliphatisch, aromatisch oder gemischt gesättigt-aliphatisch- aromatisch sein. Als aliphatisch werden im Rahmen der vorliegenden Erfindung alle organischen Reste bezeichnet, die nicht aromatisch sind. Bevorzugt ist der Rest R aliphatisch.

Der gesättigt-aliphatische Rest kann ein reiner Kohlenwasserstoffrest sein oder er kann Heteroatome aus verbrückenden Gruppen (beispielsweise Sauerstoff aus Ether- oder Estergruppen) enthalten und/oder mit funktionellen Gruppen enthaltend Heteroatome (beispielsweise Alkoholgruppen) substituiert sein. Im Rahmen der vorliegenden Erfindung wird also klar unterschieden zwischen verbrückenden Gruppen enthaltend Heteroatome und funktionellen Gruppen enthaltend Heteroatome (das heißt endständigen funktionellen Gruppen enthaltend Heteroatome).

Bevorzugt werden jedenfalls, aber nicht zwingend ausschließlich, Monomere eingesetzt, in denen der gesättigt-aliphatische Rest R ein reiner Kohlenwasserstoffrest (Alkylrest) ist, also keine Heteroatome aus verbrückenden Gruppen (beispielsweise Sauerstoff aus Ethergruppen) enthält und auch nicht mit funktionellen Gruppen (beispielsweise Alkoholgruppen) substituiert ist.

Für den Fall, dass R ein Alkylrest ist, kann es sich beispielsweise um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Steary!(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Weitere geeignete Reste R sind beispielsweise gesättigt-aliphatische Reste, die funktionelle Gruppen enthaltend Heteroatome (beispielsweise Alkoholgruppen oder Phosphorsäureestergruppen) umfassen.

Geeignete einfach ungesättigte Ester der (Meth)acrylsäure mit einem mit einer oder mehreren Hydroxylgruppen substituierten gesättigt-aliphatischen Rest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2- Hydroxyethyl(meth)acrylat ganz besonders bevorzugt ist.

Geeignete einfach ungesättigte Ester der (Meth)acrylsäure mit Phosphorsäureestergruppen sind beispielsweise Phosphorsäureester von Polypropyleneglycolmonomethacrylat, wie das kommerziell erhältliche Sipomer PAM 200 der Firma Rhodia.

Bei möglichen weiteren einfach olefinisch ungesättigten Monomeren enthaltend eine Vinylgruppe, handelt es sich um Monomere, die verschieden sind von den oben beschriebenen Acrylat-basierten Monomeren mit einem Rest R’ an der Vinylgruppe, der nicht olefinisch ungesättigt ist.

Der Rest R’ kann gesättigt-aliphatisch, aromatisch oder gemischt gesättigt-aliphatisch- aromatisch sein, wobei aromatische und gemischt gesättigt-aliphatischaromatische Reste, in denen die aliphatischen Anteile Alkylgruppen darstellen, bevorzugt sind.

Besonders bevorzugte vinylische, olefinisch ungesättigte Monomere sind vinylaromatische Kohlenwasserstoffe, insbesondere Vinyltoluol, alpha-Methylstyrol und insbesondere Styrol, oder

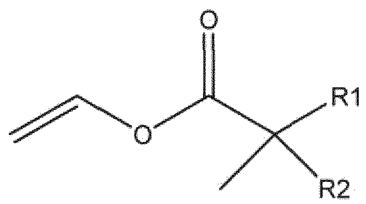

wobei die Reste R1 und R2 Alkylreste mit insgesamt 7 Kohlenstoffatomen sind. Letztgenannte Monomere sind unter dem Namen VeoVa 10 bei der Firma Momentive kommerziell erhältlich.

Weitere grundsätzlich geeignete Monomere sind olefinisch ungesättigte Monomere wie Acrylnitril, Methacrylnitril, Acrylamid, Methacrylamid, N-Dimethylacrylamid, Vinylacetat, Vinylpropionat, Vinylchlorid, N-Vinylpyrrolidon, N-Vinylcaprolactam, N-Vinylformamid, N- Vinylimidazol, N-Vinyl-2-Methylimidazolin sowie weitere ungesättigte alpha-beta-Carbonsäuren.

Beispiele geeigneter mehrfach olefinisch ungesättigter Monomere umfassen Ester der (Meth)acrylsäure mit einem olefinisch ungesättigten Rest R" und Allylether von mono- oder mehrwertigen Alkoholen. Bei dem Rest R" kann es sich um einen Allylrest handeln oder um einen (Meth)acrylsäureest.

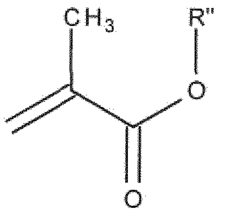 bzw. 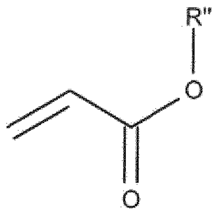

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylat-diallylether, Pentaerythrittri(meth)acrylatmonoallylether, Pentaerythritdi(meth)acrylat- diallylether, Pentaerythrit(meth)acrylattriallylether, Triallylsaccharose, und Pentaallylsaccharose.

Möglich sind auch Allylether von mono- oder mehrwertigen Alkoholen, wie beispielsweise Trimethylolpropanmonoallylether.

Sofern eingesetzt sind als mehrfach olefinisch ungesättigte Monomere Hexandioldiacrylat und/oder Allyl(meth)acrylat bevorzugt.

Hinsichtlich der in den einzelnen Polymerisationsstufen eingesetzten Monomermischungen (A), (B) und (C) sind spezielle, in der Folge dargelegte Bedingungen einzuhalten.

Zunächst ist festzuhalten, dass die Mischungen (A), (B) und (C) jedenfalls unterschiedliche voneinander sind. Sie enthalten also jeweils unterschiedliche Monomere und/oder unterschiedliche Anteile mindestens eines bestimmten Monomers.

Die Mischung (A) enthält mindestens 50 Gew.-%, bevorzugt mindestens 55 Gew.-%, von olefinisch ungesättigten Monomeren mit einer Wasserlöslichkeit von kleiner 0,5 g/l bei 25°C. Ein entsprechendes bevorzugtes Monomer ist Styrol.

Die Löslichkeit der Monomere in Wasser kann über eine Gleichgewichtseinstellung mit dem Gasraum oberhalb der wässrigen Phase bestimmt werden (analog der Literatur X.- S. Chai, Q.X. Hou, F.J. Schork, Journal of Applied Polymer Science Vol. 99, 1296-1301 (2006)).

Dazu wird in einem 20 ml Gasraumprobenröhrchen zu einem definierten Volumen an Wasser, bevorzugt 2 ml, eine so große Masse des jeweiligen Monomers gegeben, dass sich diese Masse jedenfalls nicht vollständig in dem gewählten Volumen Wasser lösen kann. Zusätzlich wird ein Emulgator (10 ppm, bezogen auf Gesamtmasse der Probenmischung) hinzugegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht. Die beschriebene Bestimmung wird bei 25°C durchgeführt.

Bevorzugt enthält die Monomerenmischung (A) keine hydroxyfunktionellen Monomere. Ebenfalls bevorzugt enthält die Monomerenmischung (A) keine säurefunktionellen Monomere.

Ganz besonders bevorzugt enthält die Monomerenmischung (A) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymerisat (a) eine Glasübergangstemperatur von 10 bis 65°C, bevorzugt von 30 bis 50°C besitzt.

Für eine zielführende Abschätzung der bei der Messung zu erwartenden Glasübergangstemperatur kann die

bekannte Fox-Gleichung (vgl. T.G. Fox, Bull. Am. Phys. Soc. 1 (1956) 123) herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat (auch genannt Polymer) wird auch als Saat bezeichnet.

Die Saat besitzt bevorzugt eine Teilchengröße von 20 bis 125 nm (gemessen mittels dynamischer Lichtstreuung (Photonenkorrelationsspektroskopie) nach DIN ISO 13321, wobei unter Teilchengröße im Rahmen der vorliegenden Erfindung der gemessene mittlere Partikeldurchmesser (Z-Average mean) zu verstehen ist. Gemessen werden kann die Teilchengröße beispielsweise mit einem "Malvern Nano S90" (Fa. Malvern Instruments).

Die Monomerenmischung (B) enthält mindestens ein mehrfach olefinisch ungesättigtes Monomer, bevorzugt mindestens ein zweifach olefinisch ungesättigtes Monomer. Ein entsprechendes bevorzugtes Monomer ist Hexandioldiacrylat.

Bevorzugt enthält die Monomerenmischung (B) keine hydroxyfunktionellen Monomere. Ebenfalls bevorzugt enthält die Monomerenmischung (B) keine säurefunktionellen Monomere.

Ganz besonders bevorzugt enthält die Monomerenmischung (B) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (B) neben dem mindestens einen mehrfach olefinisch ungesättigten Monomer jedenfalls noch folgende Monomere: Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymerisat (b) eine Glasübergangstemperatur von -35 bis 15°C, bevorzugt von -25 bis +7°C besitzt.

Das in Stufe ii. durch die Emulsionspolymerisation der Monomerenmischung (B) in Anwesenheit der Saat hergestellte Polymerisat wird auch als Kern bezeichnet. Nach der Stufe ii. resultiert also ein Polymerisat, welches Saat und Kern umfasst.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat.

Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat.

Bei allen vorstehend genannten Säurezahlen und OH-Zahlen handelt es sich um auf Basis der insgesamt eingesetzten Monomerenmischungen (A), (B) und (C) berechnete Werte ohne Zumischung des optionalen Polyurethans (P).

In einer besonders bevorzugten Ausführungsform enthält die Monomermischung (C) mindestens eine alpha-beta ungesättigte Carbonsäure und mindestens einen einfach ungesättigten Ester der (Meth)acrylsäure mit einem mit einer Hydroxylgruppe substituierten Alkylrest.

In einer ganz besonders bevorzugten Ausführungsform enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Sofern im Rahmen der vorliegenden Erfindung von einem Alkylrest ohne weitere Spezifizierung gesprochen wird, ist hierunter immer ein reiner Alkylrest ohne funktionelle Gruppen und Heteroatome zu verstehen.

Das in Stufe iii. durch die Emulsionspolymerisation der Monomerenmischung (C) in Anwesenheit von Saat und Kern hergestellte Polymerisat wird auch als Schale bezeichnet. Nach der Stufe iii. resultiert also ein Polymerisat SCS, welches Saat, Kern und Schale umfasst.

*Polyurethan (P)*

In einer bevorzugten Ausführungsform der Erfindung umfasst mindestens eine der Monomerenmischungen (A), (B) oder (C) mindestens ein wenigstens eine olefinisch ungesättigte Gruppe aufweisendes Polyurethan (P).

Das Polyurethan (P) weist vorzugsweise eine Oberflächenspannung im Bereich von 40 mN/m bis 55 mN/m bei 23 °C auf und besitzt eine Polydispersität d von kleiner 10 Die Oberflächenspannung wird vorzugsweise mit Hilfe der Ringmethode gemäß DIN EN 14210:2004-03, wobei die gemessenen Werte der Oberflächenspannung nach DIN EN 14370:2014-11 korrigiert werden. Die Messung der Oberflächenspannung erfolgt bei einer Temperatur von 23 °C. Es ist weiterhin bevorzugt, dass das Polyurethan (P) eine Oberflächenspannung im Bereich von 40,5 mN/m bis 50 mN/m bei 23 °C besitzt.

Der Begriff der Oberflächenspannung ist dem Fachmann geläufig und bezeichnet eine Eigenschaft zwischen der Oberfläche (Grenzfläche) zwischen einer Flüssigkeit und einem Gas, wie etwa der Luft.

Es ist weiterhin bevorzugt, dass das mindestens eine wenigstens eine olefinisch ungesättigte Gruppe aufweisende Polyurethan (P) eine Polydispersität d von kleiner 10. Es ist weiterhin bevorzugt, dass das Polyurethan (P) eine Polydispersität im Bereich von 2 bis 7, weiterhin bevorzugt im Bereich von 3 bis 6 aufweist.

Der Begriff der Polydispersität ist dem Fachmann geläufig. Dieser Begriff beschreibt die Breite einer Molekulargewichtsverteilung und wird durch den Quotienten aus dem gewichtsmittleren Molekulargewicht $M_w$ und dem zahlenmittleren Molekulargewicht $M_n$ berechnet. Die Bestimmung des gewichtsmittleren und des zahlenmittleren Molekulargewichts erfolgt mittels Gel-Permeations-Chromatographie (GPC) gemäß DIN55672-1 (März 2016).

Das vorzugsweise eingesetzte Polyurethan (P) weist wenigstens eine olefinisch ungesättigte Gruppe auf. Die wenigstens eine olefinisch ungesättigte Gruppe sorgt dafür, dass das Polyurethan (P) bei entsprechender Beimischung zu mindestens einer der Monomerenmischungen (A), (B) oder (C) in der Emulsionspolymerisation in die Saat bzw. den Kern bzw. die Schale einpolymerisiert wird.

Es ist bevorzugt, dass das Polyurethan (P) frei von NCO-Gruppen ist. Im Sinne dieser Erfindung bedeutet dies, dass der Gehalt an NCO-Gruppen weniger als 0,01 Gew.-% beträgt.

Es ist bevorzugt, dass das Polyurethan (P) genau eine olefinisch ungesättigte Gruppe aufweist. Es ist jedoch möglich, dass in der Reaktionsführung zur Synthese des Polyurethans (P) untergeordnete Nebenreaktionen auftreten, die dazu führen, dass das Polyurethan (P) mehr als eine olefinisch ungesättigte Gruppe aufweist.

Es ist daher bevorzugt, Polyurethane (P) einzusetzen, die zu mindestens 90 Gew.-%, bevorzugt zu mindestens 95 Gew.-%, ganz besonders bevorzugt zu mindestens 98 Gew.-% genau eine olefinisch ungesättigte Gruppe aufweisen.

Das wenigstens eine olefinisch ungesättigte Gruppe aufweisende Polyurethan (P) wird vorzugsweise hergestellt durch Reaktion wenigstens eines Polyesterdiols und wenigstens eines Polyisocyanats gefolgt von einer Kettenverlängerungsreaktion mit mindestens einer wenigstens eine olefinisch ungesättigte Gruppe enthaltenden Verbindung welche mindestens eine gegenüber Isocyanatgruppen reaktive funktionelle Gruppe aufweist.

Das wenigstens eine vorzugsweise eingesetzte Polyesterdiol wird bevorzugt durch eine Veresterungsreaktion mindestens einer Polycarbonsäure bzw. deren Ester oder Anhydride mit wenigstens einem Polyol hergestellt. Die Herstellung des Polyesterdiols weist keine Besonderheiten auf. Üblicherweise erfolgt die Veresterung mit Hilfe eines Wasserabscheiders.

Zur Synthese des Polyesterdiols ist bevorzugt, dass zumindest ein geringer molarer Überschuss des Polyols im Verhältnis zur Polycarbonsäure eingesetzt wird. In diesem Zusammenhang ist es besonders bevorzugt, dass das Verhältnis der Carbonsäuregruppen der Polycarbonsäure zu den Alkoholgruppen des Polyols 1:1,05 bis 1:2 beträgt. Weiterhin bevorzugt liegt das Verhältnis bei 1:1,1 bis 1:2.

Bevorzugt handelt es sich bei der Polycarbonsäure um eine aliphatisch gesättigte oder aromatische Carbonsäure, weiche wiederum bevorzugt eine Dicarbonsäure ist. Beispiele geeigneter aliphatisch gesättigter Dicarbonsäuren sind Ethandisäure (Oxalsäure), Propandissäure (Malonsäure), Butandisäure (Bernsteinsäure), Pentandisäure (Glutarsäure), Hexandisäure (Adipinsäure), Heptandisäure (Pimelinsäure), Octandisäure (Suberinsäure), Nonandisäure (Azaleinsäure), Decandisäure (Sebacinsäure), Maleinsäure und Hexahydrophthalsäure.

Beispiele geeigneter aromatischer Dicarbonsäuren sind 1,2-Benzoldicarbonsäure (Phthalsäure), 1,3-Benzoldicarbonsäure (Isophthalsäure) und 1,4-Benzoldicarbonsäure (Terephthalsäure). Es können auch die entsprechenden Anhydride verwendet werden, sofern diese existieren.

Es ist weiterhin möglich, dass als Polycarbonsäure Dimerfettsäuren eingesetzt werden. Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte $C_{12}$- bis $C_{22}$-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch $C_6$-aromatische

Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt $C_{18}$-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung überwiegend dimere Produkte entstehen, die also genau zwei Fettsäuremoleküle enthalten, rechtfertigt diese ohnehin gängige Benennung.

Die vorzugsweise einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma BASF SE sowie Unidyme 10 und Unidyme TI der Firma Arizona Chemical.

In der Veresterungsreaktion zur Herstellung des bevorzugten Polyesterdiols können verschiedene Polyole zum Einsatz kommen. Dabei ist insbesondere der Einsatz von Diolen bevorzugt, wobei weiterhin bevorzugt aliphatische Diole mit einem Molekulargewicht von 62 bis 500 g/mol eingesetzt werden.

Bei den Diolen kann es sich um cycloaliphatische, bevorzugt aber um acyclische aliphatische Verbindungen handeln, die zwei Hydroxylgruppen als Substituenten tragen.

Beispiele geeigneter Diole sind Ethylenglykol, Neopentylglykol, 1,2-Propandiol, 2,2-Dimethyl-1,3-Propandiol, 1,4-Butandiol, 1,3-Butandiol, 1,5,-Pentandiol, 2,2,4-Trimethyl-1,3-pentandiol, 1,6- Hexandiol, 1,4-Cyclohexandimethanol und 1,2-Cyclohexandimethanol.

Ferner kommen als Polyole auch Polyether der allgemeinen Strukturformel

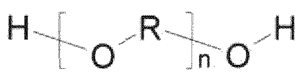

in Betracht, wobei es sich bei R um einen $C_3$ bis $C_6$-Alkylrest handelt. Der Index n ist jeweils so zu wählen, dass der besagte Polyether ein zahlenmittleres Molekulargewicht von 450 bis 2200 g/mol besitzt. Besonders bevorzugt besitzt er ein zahlenmittleres Molekulargewicht von 700 bis 1400 g/mol und ganz besonders bevorzugt von 800 bis 1200 g/mol.

In dem einzusetzenden Polyether können alle n Reste R gleich sein. Ebenso ist es aber auch möglich, das unterschiedliche Arten von Resten R vorhanden sind. Bevorzugt sind alle Reste R gleich.

Bei R handelt es sich bevorzugt um einen $C_3$- oder einen $C_4$-Alkylenrest. Besonders bevorzugt handelt es sich um einen iso-Propylen- oder einen Tetramethylenrest.

Ganz besonders bevorzugt handelt es sich bei dem erfindungsgemäß einzusetzenden Polyether um Polypropylenglycol oder um Polytetrahydrofuran.

Zur weiteren Umsetzung des durch Veresterungsreaktion erhaltenen Polyesterdiols kommen grundsätzlich alle der üblichen und bekannten, auf dem Lackgebiet verwendeten Polyisocyanate in Betracht.

Beispiele geeigneter Polyisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethylcyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-socyanato-2-(3-isocyanatoeth-1-yl)cyclohexan, 1-Isocyanato-2-(4-Isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Dicyclohexylmethan-4,4'-diisocyanat, Trimethylendiisocyanat, Tetramethylendiisocyanat, Pentamethylendiisocyanat, Hexamethylendiisocyanat, Ethylethylendiisocyanat, Trimethylhexandiisocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 und WO 97/49747 beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4- isocyanatobut-1-yl)cyclohexan, m-Tetramethylxylylendiisocyananat (= 1,3-Bis-(2-isocyanatoprop-2-yl)-benzol oder Toluylendiisocyanat.

Es können auch Isocyanurat-, Biuret-, Allophanat-, Iminooxadiazindon-, Urethan-, Harnstoff-, Carbodiimid und/oder Uretdiongruppen aufweisende Polyisocyanate verwendet werden.

Bevorzugt werden als Polyisocyanate gesättigte Isocyanate eingesetzt, besonders bevorzugt sind die Polyisocyanate ausgewählt aus der Gruppe von Isophorondiisocyanat und m-Tetramethylxylylendiisocyananat.

Ferner ist es bevorzugt, dass die Umsetzung der Polyesterdiole mit Polyisocyanaten in Gegenwart von Verbindungen zur Einführung weiterer Carboxylgruppen in das Polyurethan (P) durchgeführt wird. Dazu können beispielsweise $\alpha,\alpha$-Dimethylolalkansäuren wie 2,2-Dimethylolessigsäure, 2,2-Dimethylotpropionsäure (DMPA), 2,2-Dimethylolbuttersäure und 2,2-Dimethylolpentansäure verwendet werden, wobei insbesondere 2,2-Dimethylolpropionsäure bevorzugt ist.

Das wenigstens eine vorzugsweise eingesetzte Polyesterdiol wird mit dem wenigstens einen Polyisocyanat, vorzugsweise in Gegenwart von DMPA zu einem Isocyanatgruppen aufweisenden Zwischenprodukt umgesetzt. Die Umsetzung erfolgt dabei nach den gut bekannten Verfahren der Polyurethanchemie (vgl. z.B. Kunststoff-Handbuch, Band 7:Polyurethane, hrsg. von Dr. G.Oertel, Carl Hanser Verlag München-Wien 1983). Die Umsetzung kann lösemittelfrei durchgeführt werden, bevorzugt wird sie aber in Lösemitteln durchgeführt, die gegenüber Isocyanatgruppen inert und mit Wasser mischbar sind. Vorteilhaft werden Lösemittel eingesetzt, die neben den oben beschriebenen Eigenschaften auch noch gute Löser für die hergestellten Polyurethane sind und sich aus wässrigen Mischungen leicht abtrennen lassen. Besonders gut geeignete Lösemittel sind Aceton und Methylethylketon.

Die einzusetzenden Anteile des Polyesterdiols, des Polyisocyanats und des DMPA sind bevorzugt so zu wählen, dass aus dem Gesamtverhältnis aller Hydroxylgruppen aus dem Polyesterdiol und dem DMPA zu den Isocyanatgruppen des Polyisocyanats ein Reaktionsprodukt entsteht, welches einen Restgehalt an Isocyanatgruppen im Bereich von 0,08 bis 0,1 Gew.-% aufweist.

Im Anschluss an die vorgenannte Reaktion erfolgt vorzugsweise eine Umsetzung des so erhaltenen isocyanatgruppenhaltigen Zwischenproduktes mit mindestens einer wenigstens eine olefinisch ungesättigte Gruppe Verbindung, welche mindestens eine gegenüber Isocyanatgruppen reaktive funktionelle Gruppe aufweist.

Die gegenüber Isocyanatgruppen reaktive Gruppe wird insbesondere abgebildet durch Hydroxylgruppen sowie durch primäre und sekundäre Amine, wobei insbesondere Hydroxylgruppen bevorzugt sind. Es ist ganz besonders bevorzugt, dass die eingesetzte Verbindung genau eine olefinisch ungesättigte Gruppe aufweist.

Bevorzugt werden als Alkohole in der sogenannten Kettenverlängerungsreaktion (meth)acrylat-basierte einfach olefinisch ungesättigte Alkohole, Allylgruppen-haltige einfach olefinisch ungesättigte Alkohole und weitere Vinylgruppenhaltige einfach olefinisch ungesättigte Alkohole eingesetzt.

Besonders geeignet sind einfach ungesättigte Ester der (Meth)acrylsäure mit einem mit einer Hydroxylgruppen substituierten gesättigt-aliphatischen Rest, wie insbesondere 2- Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2- Hydroxyethyl(meth)acrylat ganz besonders bevorzugt ist.

Das Polyurethan (P) kann prinzipiell jeder der Monomerenmischungen (A), (B) oder (C) bei der Emulsionspolymerisation zugemischt werden. Dabei ist es möglich, dass das Polyurethan (P) lediglich einer der Monomerenmischungen (A), (B) oder (C) zugemischt wird. Erfolgt die Zumischung zur Monomerenmischung (A) wird das Polyurethan in die Saat des Polymerisats SCS einpolymerisiert. Erfolgt die Zumischung zur Monomerenmischung (B) erfolgt der Einbau des Polyurethans (P) in den Kern des Polymerisats SCS. Bei Zumischung des Polyurethans (P) zur Monomerenmischung (C) erfolgt die Polymerisation in die Schale des Polymerisats SCS. Es ist aber auch möglich, dass das Polyurethan (P) nicht nur einer der Monomerenmischungen beigemischt wird, sondern auch, dass zwei der drei Monomerenmischungen

(A), (B) und (C) ein Polyurethan (P) enthalten. Ferner ist auch möglich, dass allen drei Monomerenmischungen (A), (B) und (C) ein Polyurethan (P) zugemischt wird. In diesem Fall erfolgt die Polymerisation des Polyurethans (P) sowohl in die Saat, als auch in den Kern, als auch in die Schale des Polymerisats SCS.

Prinzipiell kann das Polyurethan (P) den Mischungen (A), (B) und/oder (C) in einem sehr breiten gewichtsprozentualen Anteilsbereich zugesetzt werden. Es ist dabei bevorzugt, dass der Anteil des Polyurethans (P) an der jeweiligen Mischungen (A), (B) oder (C) in einem Bereich von 0,1 bis 10,0 Gew.-% bezogen auf den Festkörpergehalt der jeweiligen Monomerenmischung (A), (B) oder (C).

Die Zugabe des Polyurethans (P) zu den Monomerenmischungen (A), (B) oder (C) bewirkt, dass dieses als Comonomer einpolymerisiert wird und das Polyurethan (P) zusätzlich eine emulgierende Wirkung hat. Um eine ausreichende Emulgatorwirkung zu erzielen, ist allerdings zu unterscheiden, ob das Polyurethan (P) der Monomerenmischung (A) oder den Monomerenmischungen (B) bzw. (C) beigemischt wird. Wird das Polyurethan (P) der Monomerenmischung (A) zugesetzt werden relativ große Mengen des Polyurethans (P) benötigt, um eine ausreichende Micellenbildung zu Beginn der Emulsionspolymerisation zu gewährleisten. Eine ausreichende Micellenbildung ist notwendig, um die gewünschte Partikelgröße steuern zu können. Es ist daher bevorzugt, dass der Anteil des Polyurethans an der Monomerenmischung (A) 0,1 bis 10 Gew.-%, bevorzugt 1 bis 9 Gew.-%, weiterhin bevorzugt 5 bis 8 Gew.-% bezogen auf den Festkörpergehalt der Monomerenmischung (A) beträgt.

Bei der Beimischung des Polyurethans (P) zu den Monomerenmischungen (B) und/oder (C) werden generell geringere Mengen des Polyurethans (P) benötigt, um eine ausreichende Emulgatorwirkung zu erzielen. Wird das Polyurethan (P) der Monomerenmischung (B) und/oder (C) beigemischt, ist es daher bevorzugt, dass der Anteil des Polyurethans (P) von 0,1 bis 1,0 Gew.-%, bevorzugt 0,15 bis 0,8 Gew.-%, weiter bevorzugt 0,2 bis 0,6 Gew.% bezogen auf den Festkörpergehalt der jeweiligen Monomerenmischung (B) oder (C) beträgt. Es ist aber auch möglich, insbesondere in Bezug auf die Monomerenmischungen (B) und (C), dass höhere Anteile des Polyurethans (P) den Monomerenmischungen beigemischt werden.

Da das Polyurethan (P) allen drei Monomerenmischungen (A), (B) und (C) beigemischt werden kann, ist es bevorzugt, dass der Anteil des Polyurethans (P) von 0,05 bis 1,8 Gew.-%, bevorzugt von 0,08 bis 1,6 Gew.-% und weiterhin bevorzugt von 0,1 bis 1,5 Gew.-% bezogen auf den Festkörpergehalt der wässrigen Dispersion beträgt.

*Die wässrige Dispersion enthaltend das Polymerisat SCS*

Das Polymerisat SCS besitzt bevorzugt nach seiner Herstellung eine Teilchengröße von 100 bis 500 nm, bevorzugt 125 bis 400 nm, ganz besonders bevorzugt von 130 bis 300 nm.

Bevorzugt werden die Anteile der Monomerenmischungen bei der Emulsionspolymerisation wie folgt aufeinander abgestimmt. Der Anteil der Mischung (A) beträgt von 0,1 bis 10 Gew.-, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Die wässrige Dispersion besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats SCS gezielt eingestellt werden.

In ganz besonders bevorzugten Ausführungsformen gilt, dass die wässrige Dispersion einen pH-Wert von 5,0 bis 9,0 aufweist und das darin enthaltene mindestens eine Polymerisat eine Teilchengröße von 100 bis 500 nm aufweist. Nochmals bevorzugtere Bereichskombinationen sind: pH-Wert von 7,0 bis 8,5 und eine Teilchengröße von 125 bis 400 nm, nochmals bevorzugt pH-Wert von 7,5 bis 8,5 und eine Teilchengröße von 130 bis 300 nm.

Bevorzugt werden die beschriebenen Stufen i. bis iii. ohne Zusatz von zur Einstellung des pH-Werts bekannten Säuren oder Basen durchgeführt. Werden bei der Herstellung des Polymerisats dann beispielsweise carboxyfunktionelle Monomere eingesetzt, was im Rahmen der Stufe iii. bevorzugt ist, so kann der pH-Wert der Dispersion nach Abschluss der Stufe iii. bei kleiner 7 liegen. Demzufolge ist eine Zugabe von Base notwendig, um den pH-Wert auf einen höheren Wert, wie beispielsweise einen Wert in den bevorzugten Bereichen, einzustellen.

Aus oben Gesagtem folgt, dass der pH-Wert bevorzugt nach der Stufe iii. entsprechend eingestellt wird beziehungsweise eingestellt werden muss, insbesondere durch Zugabe einer Base wie einer (organischen) stickstoffhaltigen Base wie einem Amin wie Ammoniak, Trimethylamin, Triethylamin, Tributylamine, Dimethylanilin, Triphenylamin, N,N-Dimethylethanolamin, Methyldiethanolamin oder Triethanolamin, sowie durch Zugabe von Natriumhydrogencarbonat oder Boraten und auch Mischungen der vorgenannten Substanzen. Dies schließt aber nicht aus, dass der pH-Wert auch vor, während oder nach den Emulsionspolymerisationen oder auch zwischen den einzelnen Emulsionspolymerisationen eingestellt werden kann. Ebenfalls möglich ist, dass durch die Wahl der Monomere die Einstellung des pH-Werts auf einen gewünschten Wert gar nicht notwendig ist.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo InLab® Routine) durchgeführt.

Die Dispersion enthaltend ein Polymerisat SCS ist wässrig. Es ist bevorzugt, dass die prozentuale Summe aus dem Festkörper der Dispersion und dem Anteil von Wasser an der Dispersion bei mindestens 80 Gew.-%, bevorzugt bei mindestens 90 Gew.-% liegt. Darunter bevorzugt sind Bereiche von 80 bis 99 Gew.-%, insbesondere 90 bis 97,5 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise eine Dispersion einen Festkörper von 25 % und einen Wassergehalt von 70 Gew.-%, so beträgt die oben definierte prozentuale Summe aus dem Festkörper und dem Anteil von Wasser 95 Gew.-%.

Demzufolge besteht die Dispersion weitestgehend aus Wasser und dem Polymerisat SCS und enthält umweltbelastende Komponenten wie insbesondere organische Lösemittel nicht oder nur in geringen Anteilen.

*Aliphatischer Monoalkohol mit 5 bzw. 6 Kohlenstoffatomen*

Das erfindungsgemäße Mischsystem umfasst neben der wässrigen Dispersion enthaltend ein Polymerisat SCS wenigstens in einer der Komponenten (1), (2) oder (3) wenigstens einen aliphatischen Monoalkohol mit 5 Kohlenstoffatomen und/oder wenigstens einen aliphatischen Monoalkohol mit 6 Kohlenstoffatomen. Es ist weiterhin bevorzugt, dass das erfindungsgemäße Mischsystem genau einen aliphatischen Monoalkohol mit 5 Kohlenstoffatomen oder genau einen aliphatischen Monoalkohol mit 6 Kohlenstoffatomen umfasst.

Vorzugsweise beträgt der gewichtsprozentuale Anteil der Summe aller aliphatischen Monoalkohole mit 5 Kohlenstoffatomen und 6 Kohlenstoffatomen in der jeweiligen Komponente (1), (2) oder (3) weniger als 5 Gew.-% bezogen auf die jeweilige Komponente (1), (2) oder (3), wobei mindestens eine der Komponenten (1), (2) oder (3) einen gewichtsprozentualen Anteil der Summe aller aliphatischen Monoalkohole mit 5 Kohlenstoffatomen und 6 Kohlenstoffatomen von mindestens 1,0 Gew.-%, bezogen auf das Gesamtgewicht der jeweiligen Komponente (1), (2) oder (3) aufweist.

Bei den erfindungsgemäß einzusetzenden aliphatischen Monoalkoholen handelt es sich vorzugsweise um aliphatische Monoalkohole, die bis auf die Hydroxylgruppe keine weiteren Heteroatome aufweisen. Die aliphatische Kohlenstoffkette des Monoalkohols kann verzweigt oder linear oder zyklisch aufgebaut sein, wobei insbesondere linear aufgebaute Monoalkohole bevorzugt sind.

Beispiele geeigneter aliphatischer Monoalkohole mit 5 Kohlenstoffatomen sind Pentan-1-ol (n-Pentanol), Pentan-2-ol, Pentan-3-ol, 2-Methylbutan-1-ol, 2-Methylbutan-2-ol, 3-Methylbutan-1-ol, 3-Methylbutan-2-ol, 2,2-Dimethylpropan-1-ol und Cyclopentanol. Besonders bevorzugt sind Pentan-1-ol, Pentan-2-ol, Pentan-3-ol, wobei Pentan-1-ol nochmals besonders bevorzugt ist.

Beispiele geeigneter aliphatischer Monoalkohole mit 6 Kohlenstoffatomen sind Hexan-1-ol (n-Hexanol), Hexan-2-ol, Hexan-3-ol, 2-Methylpentan-1-ol, 3-Methylpentan-1-ol, 4-Methylpentan-1-ol, 2-Methylpentan-2-ol, 3-Methylpentan-2-ol, 3-Methylpentan-2-ol, 4-Methylpentan-2-ol, 2-Methylpentan-3-ol, 3-Methylpentan-3-ol, 2,2-Dimethylbutan-1-ol, 2,3-Dimethylbutan-1-ol, 3,3-Dimethylbutan-1-ol, 2,3-Dimethylbutan-2-ol, 3,3-Dimethylbutan-2-ol, 2 Ethylbutan-1-ol und Cyclohexanol. Besonders bevorzugt sind Hexan-1-ol, Hexan-2-ol und Hexan-3-ol, wobei Hexan-1-ol besonders bevorzugt ist.

Prinzipiell können auch Mischungen der vorstehend genannten Monoalkohole verwendet werden. Dabei kommen sowohl Mischungen der unterschiedlichen Monoalkohole mit 5 Kohlenstoffatomen in Betracht als auch Mischungen der unterschiedlichen Monoalkohole mit 6 Kohlenstoffatomen als auch Mischungen zwischen den Monoalkoholen mit 5 Kohlenstoffatomen und 6 Kohlenstoffatomen in Betracht.

**Das wässrige Reparaturbeschichtungsmittel**

Ein weiterer Gegenstand der vorliegenden Erfindung ist ein wässriges Reparaturbeschichtungsmittel, welches hergestellt wird durch das Vermischen der Komponenten (1), (2) und (3) des erfindungsgemäßen Mischsystems. In diesem Zusammenhang ist zu beachten, dass im Fall der Verwendung eines fremdvernetzenden Polyurethans in den Komponenten (1) und/oder (2) für die Härtung ggf. ein zusätzlicher Vernetzer erforderlich ist. Dieser kann entweder den Komponenten (1) und/oder (2) direkt beigemischt werden oder über eine separate Komponente (4) kurz vor Applikation eingeführt werden. Im erstgenannten Fall ist der Vernetzer so zu wählen, dass bei sich daraus eine lagerstabile Komponente (1) bzw. (2) ergibt. Dies bedeutet, dass keine Vernetzungsreaktion beim oder direkt nach dem Vermischen eintreten darf, sondern dass die Vernetzung vielmehr eine Aktivierung beispielsweise durch erhöhte Temperatur oder das Einwirken von Strahlung bedarf. Hier können beispielsweise blockierte Isocyanate eingesetzt werden.

Wird der Vernetzer über eine separate Komponente (4) in das Reparaturbeschichtungsmittel eingeführt, so ist die Komponente (4) dem vorgemischten Reparaturbeschichtungsmittel kurz vor seiner Applikation beizumischen. In diesem Fall können sowohl Vernetzer verwendet werden, die ohne zusätzliche Einwirkung von Hitze und/oder Strahlung mit dem fremdvernetzenden Polyurethan der Komponente (1) und/oder (2) reagieren als auch Vernetzer, die einer entsprechenden Aktivierung bedürfen. Beispielhaft seien an dieser Stelle für die erste Alternative unblockierte Isocyanate angeführt.

Die Art des zu verwendenden Vernetzers ist abhängig prinzipiell abhängig von den reaktiven Gruppen, welche im Bindemittel des Reparaturbeschichtungsmittels vorhanden sind. Insbesondere ist die Art des Vernetzer auf die funktionellen Gruppen des Polyurethans sowie auf das mehrstufige hergestellte Polymerisat abzustimmen. Beispielhaft seien an dieser Stelle als mögliche Vernetzer Aminoplastharze, insbesondere Melaminharze sowie blockierte und unblockierte Polyisocyanate genannt.

Unter einem Reparaturbeschichtungsmittel ist ein in der Automobillackierung eingesetztes farb- und/oder effektgebendes Beschichtungsmittel zu verstehen, welches zur Ausbesserung und Reparatur einer Originallackierung eines Automobils eingesetzt wird. Dieses wird üblicherweise nach entsprechender Vorbehandlung, wie beispielsweise anschleifen und reinigen, des Metall- oder Kunststoffuntergrunds auf diesen appliziert. Um das farbgebende Reparaturbeschichtungsmittel insbesondere gegen Umwelteinflüsse zu schützen, wird auf dieses mindestens noch eine zusätzliche Klarlackschicht appliziert.

Der Anteil der mindestens einen wässrigen Dispersion, bezogen auf das Gesamtgewicht des wässrigen pigmentierten Reparaturbeschichtungsmittels, beträgt bevorzugt 5 bis 60 Gew.-%, besonders bevorzugt 10 bis 50 Gew.-% und ganz besonders bevorzugt 20 bis 45 Gew.-%.

Der Anteil der aus den wässrigen Dispersionen stammenden Polymerisate SCS beträgt, bezogen auf das Gesamtgewicht des wässrigen Basislacks, vorzugsweise von 1 bis 24 Gew.-%, bevorzugt 2,5 bis 20,0 Gew.-%, besonders bevorzugt 3 bis 18,0 Gew.-%.

Die Bestimmung beziehungsweise Festlegung des Anteils der aus den einzusetzenden wässrigen Dispersionen stammenden Polymerisate SCS am wässrigen Reparaturbeschichtungsmittel kann über die Bestimmung des Festkörpers (auch genannt nicht flüchtiger Anteil, Festkörpergehalt oder Festkörperanteil) einer wässrigen Dispersion, die in den Komponenten (1), (2) oder (3) eingesetzt werden soll, erfolgen.

Der Festkörpergehalt der erfindungsgemäßen Reparaturbeschichtungsmittel kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Reparaturbeschichtungsmittel bei 5 bis 70 Gew.-%, besonders bevorzugt bei 10 bis 65 Gew.-% und insbesondere bevorzugt bei 15 bis 60 Gew.-%.

Es ist weiterhin bevorzugt, das der gewichtsprozentuale Anteil der Summe aller aliphatischen Monoalkohole mit 5 Kohlenstoffatomen und 6 Kohlenstoffatomen bezogen auf das Gesamtgewicht des Reparaturbeschichtungsmittels von 0,2 bis 3,0 Gew.-%, bevorzugt von 0,4 bis 2,5 Gew.-%, beträgt.

Das erfindungsgemäße wässrige Reparaturbeschichtungsmittel weist vorzugsweise einen VOC-Gehalt von kleiner 250 g/L.

Im Falle einer möglichen Spezifizierung auf wässrige Reparaturbeschichtungsmittel enthaltend bevorzugte wässrige Dispersionen in einem speziellen Anteilsbereich gilt folgendes. Die wässrigen Dispersionen, die nicht in die bevorzugte Gruppe fallen, können selbstverständlich weiterhin im wässrigen Reparaturbeschichtungsmittel enthalten sein. Der spezielle Anteilsbereich gilt dann nur für die bevorzugte Gruppe von wässrigen Dispersionen. Bevorzugt ist allerdings, dass für den Gesamtanteil von wässrigen Dispersionen bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 10 bis 50 Gew.-% und eine bevorzugte Gruppe von wässrigen Dispersionen durchgeführt werden, so gilt dieser Anteilsbereich augenscheinlich zunächst nur für die bevorzugte Gruppe an wässrigen Dispersionen. Bevorzugt wäre dann aber, dass insgesamt von allen ursprünglich umfassten wässrigen Dispersionen bestehend aus wässrigen Dispersionen aus der bevorzugten Gruppe und wässrigen Dispersionen, die nicht in die bevorzugte Gruppe fallen, ebenfalls von 10 bis 50 Gew.-% enthalten sind. Werden also 35 Gew.-% von wässrigen Dispersionen der bevorzugten Gruppe eingesetzt, so können höchstens 15 Gew.-% der wässrigen Dispersionen der nicht bevorzugten Gruppe eingesetzt werden.

Das genannte Prinzip gilt im Rahmen der vorliegenden Erfindung für alle genannten Komponenten des Reparaturbeschichtungsmittels und deren Anteilsbereiche, beispielsweise die weiter unten genannten Pigmente oder auch die weiter unten genannten Vernetzungsmittel.

Das wässrige Reparaturbeschichtungsmittel enthält in der Regel farbgebende Pigmente und/oder optisch effektgebende Pigmente, welche über wenigstens eine Komponente (2) in das Reparaturbeschichtungsmittel eingeführt werden.

Der Anteil der Pigmente kann beispielsweise im Bereich von 1 bis 40 Gew.-%, bevorzugt 2 bis 20 Gew.-%, besonders bevorzugt 5 bis 15 Gew.-%, bezogen auf das Gesamtgewicht des wässrigen Reparaturbeschichtungsmittels, liegen.

Ein weiterer Gegenstand der vorliegenden Erfindung ist ein Verfahren zur Herstellung von wässrigen Reparaturbeschichtungsmitteln, dadurch gekennzeichnet, dass hierfür das erfindungsgemäße Mischsystem eingesetzt wird.

Ein weiterer Gegenstand der vorliegenden Erfindung ist daher die Verwendung des erfindungsgemäßen Mischsystems zur Herstellung von wässrigen Reparaturbeschichtungsmitteln für die Automobilreparaturlackierung. Alle im

Zusammenhang mit dem erfindungsgemäßen Mischsystem hierin zuvor beschriebenen bevorzugten Ausführungsformen sind auch bevorzugte Ausführungsformen des erfindungsgemäßen Mischsystems hinsichtlich seiner Verwendung zur Herstellung von wässrigen Reparaturbeschichtungsmitteln für die Automobilreparaturlackierung.

Im Folgenden wird die Erfindung anhand von Beispielen erläutert.

**Beispiele**

Methodenbeschreibung:

**Bestimmung der Säure-Zahl**

Die Bestimmung der Säurezahl erfolgte gemäß DIN EN ISO 2114 (Datum: Juni 2002), wobei "Verfahren A" eingesetzt wird. Die Säurezahl entspricht der Masse an Kaliumhydroxid in mg, die zur Neutralisation von 1 g Probe unter den in der DIN EN ISO 2114 festgelegten Bedingungen erforderlich ist. Die angegebene Säure-Zahl entspricht dabei der in der DIN Norm angegebenen Gesamtsäurezahl.

**Bestimmung der OH-Zahl**

Die Bestimmung der OH-Zahl erfolgte nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

**Bestimmung des zahlenmittleren und des gewichtsmittleren Molekulargewichts**

Die Bestimmung des zahlenmittleren Molekulargewichts ($M_n$) erfolgte mittels Gel-Permeations-Chromatographie (GPC) gemäß DIN 55672-1 (Datum: August 2007). Neben dem zahlenmittleren Molekulargewicht können mit dieser Methode zudem das gewichtsmittlere Molekulargewicht ($M_w$) sowie die Polydispersität d (Verhältnis von gewichtsmittlerem Molekulargewicht ($M_w$) zu zahlenmittlerem Molekulargewicht ($M_n$)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

**Bestimmung der Oberflächenspannung**

Die Bestimmung der Oberflächenspannung der Polyurethane (P) erfolgte mit Hilfe der Ringmethode gemäß DIN EN 14210:2004-03 bei 23 °C.. Als entsprechendes Messgerät wurde ein Ring-/Platte-Tensiometer der Firma Lauda eingesetzt (Lauda TE1C mit Du- Noüy-Ring und Wilhelmy-Platte). Die Werte der Oberflächenspannung werden nach DIN EN 14370:2014-11 korrigiert.

**Bestimmung des Festkörperanteils bzw. des nicht-flüchtigen Anteils**

Der Festkörperanteil der wässrigen Dispersion wurde nach DIN EN ISO 3251 (01. Juni 2008) bei 125 °C, 60 min, Einwaage 1,0 g, bestimmt (Tabelle A.2, Verfahren C der DIN EN ISO 3251). Die Bestimmung des Festkörperanteils des Reparaturbeschichtungsmittel bzw. der einzelnen Komponenten des Mischsystems erfolgte gemäß DIN EN ISO 3251, Tabelle A.1 (Datum: 1.6.2008). Dabei werden 1 g Probe in eine vorher getrocknete Aluminiumschale eingewogen und 60 Minuten bei 130 °C im Trockenschrank getrocknet, im Exsikkator abgekühlt, und dann zurückgewogen. Der Rückstand bezogen auf die Gesamtmenge der eingesetzten Probe entspricht dem Festkörperanteil.

**Bestimmung der Trockenschichtdicken**

Die Bestimmung der Schichtdicken erfolgte nach DIN EN ISO 2808 (Datum: Mai 2007), Verfahren 12A unter Verwendung des Messgerätes MiniTest® 3100 - 4100 der Firma ElektroPhysik.

**Herstellen von Mehrschichtaufbauten**

Zur Beurteilung der Eigenschaften der erfindungsgemäßen Wasserbasislacke sowie von Vergleichszusammensetzungen wurden Mehrschichtlackierungen nach der folgenden allgemeinen Vorschrift hergestellt:

Ein mit einer Standard-KTL (CathoGuard® 580 Schwarz der Firma BASF Coatings) beschichtetes Stahlblech wird angepadded (manuelles Anrauen des Substrates mit einem Schleifvlies 3M™ Scotch-Brite™) und anschließend mit einem Reinigungsmittel (Glasurit® 700-1) gereinigt. Zunächst wird mit Hilfe einer Spritzpistole (SATAjet® HVLP 4000, Eingangsdruck: 2 bar, Druck an der Düse: 0,7 bar) ein handelsüblicher Füller (Glasurit® 285-270 Grundfüller Pro, Glasurit® 929-58 Füllerhärter Pro und Glasurit® 352-91 Einstellzusatz im Volumenverhältnis 5:1:1) in 2 Spritzgängen appliziert und anschließend für 30 Minuten bei 60 °C getrocknet; die resultierende Trockenschichtdicke soll 60 μm betragen.

Nach dem Anschleifen mittels eines Exzenterschleifers (Haftschleifblätter 150 mm P 400) und einem anschließenden Reinigen mit einem Reinigungsmittel (Glasurit® 700-1) wird mit einer Spritzpistole (SATAjet® HVLP 4000, Eingangsdruck: 2 bar, Druck an der Düse: 0,7 bar) der jeweilige Wasserbasislack nach Methode A (zunächst zwei Spritzgänge, nach denen jeweils die resultierende Schicht ca. 10-15 Minuten abgelüftet wird, bis die Oberfläche matt erscheint, sowie anschließend ein dem Fachmann bekannter Effektgang, der für einen guten Metallic-Effekt sorgt, sowie ein sich anschließendes erneutes Ablüften für 5 Minuten) oder B (zwei Spritzgänge ohne zwischenzeitliches Ablüften, also eine Nass-in-Nass-Applikation, anschließend ein Ablüften für ca. 15-20 Minuten, bis die Oberfläche matt erscheint ohne ein sich anschließender Effektgang) appliziert. Die resultierende Gesamttrockenschichtdicke des jeweiligen Beschichtungsmittels soll dabei 10 μm betragen.

Im Anschluss erfolgt in zwei Spritzgängen die Applikation eines handelsüblichen Klarlackes (Glasurit® 923-335 HS-Multi-Klarlack und Glasurit® 929-33 Härter im Volumenverhältnis 2:1 sowie auf diese Mischung ein 10%iger Volumenanteil Glasurit® 352-91 Rheologiemodul) mit einer Zieltrockenschichtdicke von 50-60 μm. Die Trocknung wird für 30 Minuten bei 60 °C durchgeführt.

**Bestimmung der Beständigkeit gegen Feuchtigkeit**

Zur Bestimmung der Beständigkeit der erfindungsgemäßen

Beschichtungszusammensetzungen sowie der Vergleichszusammensetzungen gegenüber Feuchtigkeit wurden entsprechend lackierte Substrate gemäß DIN EN ISO 6270-2 (Datum: September 2005) über einen Zeitraum von 10 Tagen in einer Klimakammer nach Prüfklima CH einem Kondenswasser-Konstantklima-Test unterzogen. Anschließend wurden die Bleche 1 Stunde bzw. 24 Stunden nach Entnahme aus der Klimakammer visuell bezüglich Blasenbildung und Quellung untersucht. Tritt keine Quellung auf, wird das Ergebnis als iO (in Ordnung) bezeichnet. Bei nur leichter Quellung wird das Ergebnis als biO (bedingt in Ordnung) gewertet, bei stärkerer Quellung ist das Ergebnis als niO (nicht in Ordnung) zu bewerten.

Das Auftreten von Blasen wird folgendermaßen durch eine Kombination von 2 Werten beurteilt:

- Die Anzahl der Blasen wird durch eine Mengenangabe von 0 bis 5 bewertet, wobei mit m1 sehr wenige und m5 sehr viele Blasen bezeichnet werden.
- Die Größe der Blasen wird durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

Zur Beurteilung der technologischen Eigenschaften der Mehrschichtaufbauten nach Schwitzwasserbelastung wurden Gitterschnitte nach DIN EN ISO 2409 durchgeführt (Note GT 0 bis GT 5; 0 = bester Wert; 5 = schlechtester Wert).

**Bestimmung der Haftungseigenschaften im Steinschlag- bzw. Dampfstrahltest**

Die Beurteilung der Mehrschichtlackierungen bzgl. Steinschlaghaftung erfolgt nach DIN EN ISO 20567-1 (April 2007), Verfahren B. Die Beurteilung des sich ergebenden Schadensbildes erfolgt ebenfalls nach DIN EN ISO 20567-1. Des Weiteren wurden Dampfstrahltests nach DIN 55662, Verfahren B durchgeführt. Das Anbringen der Ritze (Andreaskreuz) erfolgte dabei mit einem Ritzstichel nach Sikkens (siehe DIN EN ISO 17872 Anhang A). Die Beurteilung der Ergebnisse Dampf Strahltests wurde nach DIN 55662 durchgeführt, wobei insbesondere die maximale Breite der Ablösungen in Millimetern bestimmt wurde.

**Bestimmung der winkelabhängigen Helligkeiten / des Flop-Index**

Zur Bestimmung der Helligkeit oder des Flop-Indexes wird ein entsprechend beschichtetes Substrat (Mehrschichtaufbau gemäß vorstehend beschriebenem Verfahren, Methode A oder B) mit Hilfe eines Spektralphotometers (z.B. X-Rite MA60B+BA Multi-Angle Spectrophotometer) vermessen. Dabei wird die Oberfläche mit einer Lichtquelle

beleuchtet. Unter verschiedenen Winkeln wird eine spektrale Detektion im sichtbaren Bereich durchgeführt. Aus den so erhaltenen spektralen Messwerten können, unter Einbeziehung der Normspektralwerte sowie des Reflektionsspektrums der eingesetzten Lichtquelle, Farbwerte im CIEL*a*b*-Farbraum berechnet werden, wobei L* die Helligkeit, a* den Rot-Grün-Wert und b* den Gelb-Blau-Wert charakterisieren. Dieses Verfahren ist zum Beispiel in der ASTM E2194-12 insbesondere für Beschichtungen beschrieben, die wenigstens ein Effektpigment als Pigment enthalten. Der oft für die Quantifizierung des sogenannten Metallic-Effekts herangezogene abgeleitete Wert ist der sogenannte Flop-Index, welcher die Abhängigkeit der Helligkeit vom Beobachtungswinkel beschreibt. Aus den ermittelten Helligkeitswerten für die Betrachtungswinkel 25° und 75° kann ein Flop-Index (FI) nach der Formel

$$FI = (L^*_{25°} / L^*_{75°}) * 100$$

berechnet werden, wobei L* für den im jeweiligen Messwinkel (25° und 75°) gemessenen Helligkeitswert steht.

**Bestimmung des Gehaltes an freien Isocyanatgruppen**

Die Ermittlung des Gehalts an freien Isocyanatgruppen, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1N Salzsäure gemäß DIN EN ISO 3251, DIN EN ISO 11909 und DIN EN ISO 14896 bestimmt. Über den Anteil eines Polymerisats (Festkörper) in Lösung kann auf den NCO-Gehalt des Polymerisats bezogen auf Festkörpergehalt zurückgerechnet werden.

**Bestimmung der Glasübergangstemperatur Tg der Polymerisate**

Die Glasübergangstemperatur Tg wird im Rahmen der Erfindung experimentell gemäß DIN 51005 "Thermische Analyse (TA) - Begriffe" und DIN 53765 (März 1994) "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung gemäß DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

**Bestimmung der Teilchengröße der Polymerisate**

Die Bestimmung der Teilchengröße der Polymerisate erfolgte mittels dynamischer Lichtstreuung nach DIN ISO 13321 (Oktober 2004).

**Bestimmung des VOC-Gehalts**

Die Bestimmung des VOC-Gehalts der wässrigen Reparaturbeschichtungsmittel erfolgt gemäß DIN ISO 11890-1(September 2009).

**Ausführungsbeispiele**

Die nachfolgenden Beispiele und Vergleichsbeispiele dienen der Erläuterung der Erfindung, sind jedoch nicht einschränkend auszulegen.

Sofern nicht anders angeführt, handelt es sich bei den Angaben in Teilen um Gewichtsteile und bei Angaben in Prozenten jeweils um Gewichtsprozente.

**1. Eingesetzte Komponenten**

Die nachfolgend genannten und zur Herstellung des erfindungsgemäßen Mischsystems und entsprechender

Vergleichsbeispiele eingesetzten Komponenten haben die folgende Bedeutung:

| | |
|---|---|
| Dimerfettsäure | polymere Fettsäure (Dimerengehalt mindestens 98 Gew.-%, Trimerengehalt höchstens 2 Gew.-%, Monomerengehalt höchstens Spuren), z.B. Pripol® 1012 der Firma Croda |
| PTHF | PolyTHF® 1000, erhältlich von BASF SE |
| DMPA | Dimethylolpropionsäure |
| NCO | Isocyanat |
| IPDI | Isophorondiisocyanat |
| DMEA | Dimethylethanolamin |
| TMP-Al | Trimethylolpropanmonoallylether, kommerziell erhältlich von der Firma Perstorp |
| VE-Wasser | deionisiertes Wasser |
| EF 800 | Aerosol® EF-800, kommerziell erhältlicher Emulgator der Firma Cytec |
| APS | Ammoniumperoxodisulfat |
| 1,6-HDDA | 1,6-Hexandioldiacrylat |
| 2-HEA | 2-Hydroxyethylacrylat |
| MMA | Methacrylsäuremethylester |
| Acrysol RM-8 | Nichtionischer Polyurethan Verdicker der Firma The Dow Chemical Company |
| Acticide B20 | Biozid der Firma Thor GmbH |
| Aquacer 840 | Kationische Emulsion eines oxidierten HD (high-density) Polyethylenwaxes der Firma BYK Chemie GmbH |
| Rheovis AS 1130 | Acrylatverdicker erhältlich von der BASF SE |
| Aerosil® R 972 | hydrophbierte pyrogene Kieselsäure erhältlich von Evonik Industries AG |
| Aerodisp® WR 8520 | Kieselsäuredispersion erhältlich von Evonik Industries AG |
| Raybo 61 AquaWet | Oberflächenadditiv erhältlich von Raybo Chemical Company |
| Laponite® RD | Na-Mg-Schichtsilikat der Firma BYK Chemie GmbH |
| Pluriol® P900, | Polypropylenoxid erhältlich von BASF SE |
| Parmetol DF 35 | Biozid erhältlich von Schülke & Mayr GmbH |

**1.** Beispiele für die Herstellung der wässrigen Dispersionen enthaltend mindestens eine Polymerisat SCS

1.1 Synthese eines Polyurethans (P)

***a)*** *Herstellung eines Polyesterdiols ED1*

Eine polymere Fettsäure (Dimerengehalt mindestens 98 Gew.-%, Trimerengehalt höchstens 2 Gew.-%, Monomerengehalt höchstens Spuren) wird in einem Reaktionsgefäß mit Rührer, Rückflusskühler und Wasserabscheider vorgelegt und mit einer Diolkomponente sowie Cyclohexan als Schleppmittel gemischt. Es wird so lange unter Rühren auf eine Temperatur im Bereich von 160 bis 240 °C erhitzt, bis die erwünschte Menge an Wasser abgeschieden ist, welche den vollständigen oder gewünschten Umsatz anzeigt.

**Tabelle 1.1: Zusammensetzung / Kennzahlen des Polyesterdiols ED1**

| | Position | **ED1** |
|---|---|---|
| Di merfettsä ure | 4 | 17,83 |
| PTHF | 5 | 61,56 |
| Cyclohexan als Schleppmittel | 7 | 0,80 |
| | | |
| **Festkörpergehalt** [%] | | 97 |
| **OH-Zahl** [mg KOH/g] | | 50 |
| **Säurezahl** [mg KOH/g] | | 2,5 |
| **Mn** [g/mol] | | 3450 |

***b)** Herstellung des Polyurethans **(P1)***

Das Polyesterdiol **ED1,** DMPA sowie eine Diisocyantkomponente werden zusammen mit einem inerten Lösungsmittel, beispielsweise MEK in ein Reaktionsgefäß mit Rührer und Rückflusskühler eingewogen. Das Gemisch wird anschließend auf 80 C geheizt. Diese Temperatur wird beibehalten, bis der gemessene Gehalt an freien Isocyanatgruppen konstant ist.

Anschließend wird bei 80 °C mit einer Hydroxylverbindung enthaltend olefinisch ungesättigte Gruppen (im 20%igen Überschuss) eine Kettenverlängerung durchgeführt. Die Zugabe erfolgt dabei innerhalb von 30 Minuten. Anschließend wird bei konstanter Temperatur so lange weitergerührt, bis ein Gehalt an freien Isocyanatgruppen weniger als 0,01 Gew.-% erhalten wird; eventuell noch vorhandene restliche Isocyanatgruppen werden dabei mit Butanol umgesetzt.

Anschließend wird bei 80 °C DMEA innerhalb von 30 Minuten gleichmäßig zugegeben und anschließend 1 Stunde homogenisiert, so dass ein Neutralisationsgrad von 80% erhalten wird. Danach wird das Harz mit deionisiertem Wasser auf den entsprechenden Festkörper eingestellt, wobei das Wasser innerhalb von 90 Minuten gleichmäßig zugegeben wird. Nachdem wiederum eine Stunde homogenisiert wurde, wird das Lösungsmittel unter Vakuum bei 80 °C abdestilliert.

**Tabelle 1.2: Zusammensetzung des Polyurethans (P1)**

| | **(P1)** |
|---|---|
| **Polyesterdiol** | |
| **ED1** | 20,38 |
| DMPA | 23,49 |
| **Diisocyanat** | |
| IPDI | 58,82 |
| **Kettenverlängerung** | |
| TMP-Al | 17,70 |
| **Neutralisation** | |
| Neutralisationsgrad, eingestellt mit DMEA | 80% |

**Tabelle 1.3: Kennzahlen des Polyurethans (P1)**

| | **(P1)** |
|---|---|
| **Kennzahlen** | |
| Festkörpergehalt [%] | 27,6 |
| Säurezahl [mg KOH/g] | 22,0 |
| $M_n$ | 7310 |
| $M_w$ | 40090 |
| Polydispersität d | 5,5 |
| Teilchengröße $D_h$ [nm] | 42 |
| Oberflächenspannung [mN/m] | 40,9 |

1.2 Synthese der wässrigen Dispersion **BM1** enthaltend das Polymerisat **SCS1**

Monomerenmischung (A), Stufe i.

80 Gew.-% der Positionen 1 und 2 aus Tabelle 1.4 werden in einen Stahlreaktor (5 L Volumen) mit Rückflusskühler gegeben und auf 80°C aufgeheizt. Die restlichen Anteile der unter "Vorlage" in Tabelle 1.4 aufgeführten Komponenten werden in einem separaten Gefäß vorgemischt. Dieses Gemisch und davon getrennt die Initiatorlösung (Tabelle 1.4 Position 5 und 6) werden zeitgleich innerhalb von 20 Minuten in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 Minuten gerührt.

Monomerenmischung (B), Stufe ii.

Die in Tabelle 1.4 unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

Monomerenmischung (C), Stufe iii.

Die in Tabelle 1.4 unter "Mono 2" angegebenen Komponenten werden in einem separaten Gefäß vorgemischt. Dieses Gemisch wird innerhalb von 1 Stunde in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt.

Danach wird das Reaktionsgemisch auf 60°C abgekühlt und das Neutralisationsgemisch (Tabelle 1.4, Positionen 20, 21 und 22) in einem separaten Gefäß vorgemischt. Das Neutralisationsgemisch wird innerhalb von 40 Minuten in den Reaktor zu getropft, wobei der pH-Wert der Reaktionslösung auf einen Wert von 7,5 bis 9,5 eingestellt wird. Anschließend wird das Reaktionsprodukt noch 30 Minuten gerührt, auf 25°C abgekühlt und filtriert.

**Tabelle 1.4: Wässrige Dispersion BM1 enthaltend das mehrstufige Polymerisat SCS1**

| | | **BM1** |
|---|---|---|
| | **Vorlage** | |
| 1 | VE-Wasser | 41,22 |
| 2 | EF800 | 0,18 |
| 3 | Styrol | 0,47 |
| 4 | n-Butylacrylat | 0,67 |
| | Initiatorlösung | |
| 5 | VE-Wasser | 0,52 |
| 6 | APS | 0,02 |
| | **Mono** 1 | |
| 7 | VE-Wasser | 12,61 |
| 8 | EF800 | 0,15 |
| 9 | APS | 0,02 |
| 10 | Styrol | 5,53 |
| 11 | n-Butylacrylat | 13,42 |
| 12 | 1,6-HDDA | 0,34 |
| | **Mono 2** | |
| 13 | VE-Wasser | 5,65 |
| 14 | SCS1 | 1,44 |
| 15 | APS | 0,02 |
| 16 | Methacrylsäure | 0,70 |
| 17 | 2-HEA | 0,94 |
| 18 | n-Butylacrylat | 3,69 |
| 19 | MMA | 0,57 |
| | Neutralisation | |
| 20 | VE-Wasser | 6,39 |

(fortgesetzt)

| | | |
|---|---|---|
| | Neutralisation | |
| 21 | Butylglykol | 4,70 |
| 22 | DMEA | 0,75 |

Der Festkörper der wässrigen Dispersion BM1 wurde zur Reaktionskontrolle bestimmt. Die Ergebnisse sind zusammen mit dem pH-Wert und der bestimmten Teilchengrößen des Polymerisats SCS1 in Tabelle 1.5 angeben.

**Tabelle 1.5: Kennzahlen der wässrigen Dispersion BM1 und des Polymerisats SCS1**

| | **BM1/SCS1** |
|---|---|
| Festkörpergehalt [%] | 25,6 |
| pH-Wert | 8,85 |
| Teilchengröße [nm] | 246 |

**2.** Synthese weiterer Komponenten zur Herstellung des Stammlacks (SL), der Basisfarbe (BF) und des Rheologiemoduls (EZ)

**2.1 Synthese einer Polyurethanbindemitteldispersion PD1**

*a) Herstellung eines Polyesterpräpolymers PP1*

In einem 4 l Edelstahlreaktor, ausgestattet mit Ankerrührer, Thermometer, Kühler, Thermometer zur Kopftemperaturmessung und Wasserabscheider wird ein Polyesterharz hergestellt aus dimerisierter Fettsäure (Pripol® 1012, Fa. Croda), Isophthalsäure (Fa. BP Chemicals) und Hexan-1,6-diol (Fa. BASF SE). Das Gewichtsverhältnis der Ausgangsstoffe dimerisierte Fettsäure zu Isophthalsäure zu Hexan-1,6-diol beträgt dabei 54,00 : 30,02 : 15,98. Zu dieser Mischung werden 2 Gew.% Cyclohexan als Schleppmittel gegeben.

Die Mischung wird zunächst auf 100°C aufgeheizt. Es wird langsam weitergeheizt bis zum Einsetzen der Kondensation. Bei einer maximalen Kopftemperatur von 85°C wird dann schrittweise bis auf 220°C weitergeheizt. Der Reaktionsfortschritt wird über die Bestimmung der Säurezahl verfolgt. Nach Erreichen einer Säurezahl von $\leq$ 3 mg KOH/g destilliert man noch vorhandenes Cyclohexan unter Vakuum ab. Das so erhaltene Polymer wird in Methylethylketon angelöst, dass sich ein Festkörper von 73% ergibt. Das erhaltene Polymer wies eine Hydroxylzahl von 73 mg KOH / g Festkörperanteil und ein (berechnetes) zahlenmittleres Molekulargewicht von 1379 g/mol auf mit einer OH-Funktionalität von 2,0.

Experimentelle Daten:

$M_n$: 1250 g/mol
Viskosität: 632 mPa·s (gemessen bei 23°C mit einem Rotationsviskosimeter der Fa. Brookfield, Typ CAP 2000+, Spindel 3, Scherrate: 10000 $s^{-1}$)

*b) Herstellung der Polyurethanbindemitteldispersion PD1*

In einem 4 L-Edelstahlreaktor, ausgerüstet mit Rührer, Rückflusskühler und Thermometer wird die *Polyurethanbindemitteldispersion* nach einem modifizierten Acetonverfahren synthetisiert.

Dazu werden 108,9 Teile Dimethylolpropionsäure, 587,7 Teile Dicyclohexylmethan-4,4'- diisocyanat, 22,6 Teile Neopentylglykol und 1218,7 Teile des Präpolymers PP1 zusammengegeben. Nach Zugabe von Methylethylketon wird die Mischung (bei einem Festkörpergehalt von 67 $\pm$1%) bei 80 - 82°C unter Rühren zur Reaktion gebracht.

Man kontrolliert die Reaktion durch Titration des Isocyanatgehaltes mit Dibutylamin nach DIN EN ISO 3251. Ist der Gehalt an Isocyanat konstant und hat einen Isocyanatgehalt von 0,8 - 1,2% bezogen auf die vorliegende Lösung erreicht, wird ein auf die Menge an gemessenem freiem NCO bezogener molarer Überschuss von 115% an Trimethylolpropan zugesetzt.

Die Synthese wird fortgesetzt, bis der NCO-Gehalt einen Wert von weniger als 0,3% bezogen auf die Lösung erreicht hat. Die Viskosität beträgt dann 1200 - 1400 mPa·s (in 1:1 Mischung mit *N*-Ethyl-2-pyrrolidon, Platte/Kegel, CAP 03, 5000 $s^{-1}$, 23°C).

Mit einem Überschuss an Butanol lässt man dann für 3 Stunden das verbliebene Isocyanat bei 80 - 82°C abreagieren. Zur Neutralisation wird dann ein Gemisch aus Diethanolamin und Wasser zugegeben, so dass die Carboxylfunktionen zu ca. 65 - 70% neutralisiert sind. Nach weiteren 30 Minuten wird deionisiertes Wasser zugesetzt, um einen Festkörpergehalt (ohne Methylethylketon) von ca. 28 -30% zu erreichen. Zusätzlich werden, bezogen auf den Festkörpergehalt der angestrebten Dispersion 5 Gew.-% Pluriol® P900 der Firma BASF SE als Co-Lösungsmittel zugegeben. Im Vakuum wird dann das Methylethylketon abdestilliert, für das Polymer wird dann ein Festkörpergehalt von 30 - 32% bestimmt. Die so erhaltene weißliche Dispersion hat eine Viskosität von 500 - 2000mPa·s (Rotationsviskositmeter, Z3, 23°C, 10 $s^{-1}$).

## 2.2 Synthese einer Polyurethanbindemitteldispersion PD2

In einem 4 L-Edelstahlreaktor, ausgerüstet mit Rührer, Rückflußkühler und Thermometer wird die Polyurethanbindemitteldispersion PD2 nach einem modifizierten Acetonverfahren synthetisiert.

Dazu werden 91,8 Teile Dimethylolpropionsäure, 495,8 Teile Dicyclohexylmethan-4,4'- diisocyanat und 19,22 Teile Neopentylglykol und 1028,1 Teile PP1 zusammengegeben. Nach Zugabe von Methylethylketon wird die Mischung (bei einem Festkörpergehalt von 67 ±1 %) bei 80 - 82°C unter Rühren zur Reaktion gebracht.

Man kontrolliert die Reaktion durch Titration des Isocyanatgehaltes mit Dibutylamin nach DIN EN ISO 3251. Ist der Gehalt an Isocyanat konstant und hat einen Isocyanatgehalt von 1,0 - 1,2% bezogen auf die vorliegende Lösung erreicht, wird ein auf die Menge an gemessenen freien NCO bezogener molarer Überschuss von 130% an Trimethylolpropan zugesetzt. Es wird dann unter fortwährender Messung der Viskosität bis zu einer Viskosität von 680 - 750 mPas (in 1:1 Mischung mit N-Ethyl-2-pyrrolidon, Platte/Kegel, CAP 03, 5000 $s^{-1}$, 23°C) polymerisiert. Bei Erreichen des Zielfensters werden 100 Teile Butylglykol zugesetzt. Zur Neutralisation wird ein Gemisch aus Dimethylethanolamin und Butylglykol zugegeben, so dass die Carboxylfunktionalitäten zu ca. 65 - 70% neutralisiert sind und dass nach Entfernen des Ketones durch Destillation ein Feststoffgehalt von 44 ± 1% resultiert. Es resultiert eine klare gelbliche Lösung mit einer Viskosität von 1400 - 1850 mPa·s gemessen bei einem Festkörpergehalt von 35% in Butylglykol.

## 2.3 Acrylatbindemitteldispersion AD1

Bei der Acrylatbindemitteldispersion AD1 handelt es sich um ein mit polyethergruppen-modifiziertes Acrylat mit einem Festkörperanteil von 42,5 ± 1% in Wasser/Butylglykol (1:1); das Molekulargewicht des zur Modifizierung verwendeten Polyethers beträgt 2000 g/mol.

Die Acrylatbindemitteldispersion AD1 weist eine Viskosität von 900 - 100 mPa·s (CAP2000, 23°C, Cone3, 5000/s) auf. Das Molekulargewicht wurde bestimmt mit $M_n$ 5000 - 8000 g/mol bzw. $M_w$ von 15000 - 30000 g/mol.

## 3. Beispiele für Mischsysteme zur Herstellung wässriger Reparaturbeschichtungszusammensetzungen

### 3.1 Herstellung von Na-Mg-Schichtsilikatdispersionen

*a) Herstellung einer 1,5%igen Na-Mg-Schichtsilikatdispersion*

1,5 Gew.-% eines handelsüblichen Natrium-Magnesium-Schichtsilikates (vorzugsweise Laponite RD, erhältlich von BYK-Chemie GmbH) werden in Anwesenheit von 1,0 Gew.-% Pluriol® 900 (erhältlich von BASF SE) in deionisiertem Wasser zu einer Mischung dispergiert.

***b)** Herstellung einer 3%igen Na-Mg-Schichtsilikatdispersion*

3,0 Gew.-% eines handelsüblichen Natrium-Magnesium-Schichtsilikates (vorzugsweise Laponite RD, erhältlich von BYK-Chemie GmbH) werden in Anwesenheit von 3,0 Gew.-% Pluriol® 900 (erhältlich von BASF SE) in deionisiertem Wasser zu einer Mischung dispergiert.

### 3.2 Herstellung verschiedener Stammlacke SL1 bis SL7

Die in der Tabelle 3.1 aufgeführten Komponenten werden in der angegebenen Reihenfolge unter Rühren zu einer wässrigen Mischung zusammengeführt. Anschließend wird nochmals 10 min lang intensiv gerührt.

**Tabelle 3.1: Herstellung der Stammlacke SL1 bis SL7**

| | SL1 | SL2 | SL3 | SL4 | SL5 | SL6 | SL7 |
|---|---|---|---|---|---|---|---|
| | | | | | | | |
| 1,5%ige Na-Mg-Schichtsilikatdispersion | 10,60 | 45,60 | 45,60 | 45,60 | 45,60 | 45,60 | 45,60 |
| Bindemitteldispersion hergestellt gemäß der Patentanmeldung EP 022 8003 B2, S. 8, Z. 6 bis 18 | 52,70 | | | | | | |
| Polyurethanbindemitteldispersion PD2 | | 22,00 | 22,00 | 22,00 | 22,00 | 22,00 | 22,00 |
| Wässrige Dispersion BM1 | | 25,00 | 25,00 | 25,00 | 25,00 | 25,00 | 25,00 |
| Acrysol™ RM-8 | 0,25 | | | | | | |
| Acticide B20 | 0,20 | | | | | | |
| Butylglykol | | 3,40 | | | | | |
| n-Pentanol | | | 3,40 | | | | |
| *n*-Hexanol | | | | 3,40 | | | |
| *n*-Propanol | | | | | 3,40 | | |
| *n*-Butanol | | | | | | 3,40 | |
| *n*-Octanol | | | | | | | 3,40 |
| | | | | | | | |
| Aquacer® 840 | | 2,50 | 2,50 | 2,50 | 2,50 | 2,50 | 2,50 |
| Rheovis® AS 1130 | | 0,50 | 0,50 | 0,50 | 0,50 | 0,50 | 0,50 |
| deionisiertes Wasser | 36,25 | 1,00 | 1,00 | 1,00 | 1,00 | 1,00 | 1,00 |
| | | | | | | | |
| Summe: | 100,00 | 100,00 | 100,00 | 100,00 | 100,00 | 100,00 | 100,00 |

### 3.3 Herstellung verschiedener Basisfarben BF1 und BF2

Die in der Tabelle 3.2 aufgeführten Komponenten werden in der angegebenen Reihenfolge zu einer Mischung zusammengerührt. Sodann wird 10 min lang gerührt.

**Tabelle 3.2: Herstellung der Basisfarben BF1 und BF2**

| | BF1 | BF2 |
|---|---|---|
| | | |
| Polyurethanbindemitteldispersion PD2 | 51,75 | |
| Polyurethanbindemitteldispersion PD1 | | 52,00 |
| 2,4,7,9-Tetramethyl-5-decindiol, 52%ig in BG (erhältlich von BASF SE) | 6,60 | |
| 2-Butanol | 14,33 | |
| 3%ige Na-Mg-Schichtsilikatdispersion | | 10,00 |
| Aerosil® R 972 | 2,03 | |
| Aerodisp® WR 8520 | | 5,00 |
| Raybo 61 AquaWet | 0,30 | |
| Acrylatbindemitteldispersion AD1 | | 5,00 |
| deionisiertes Wasser | | 6,00 |

(fortgesetzt)

| | BF1 | BF2 |
|---|---|---|
| Handelsübliches Aluminiumpigment (Alu Stapa Hydrolux 2156, erhältlich von Firma Altana-Eckart) | 25,00 | 22,00 |
| | | |
| Summe: | 100,00 | 100,00 |

### 3.4 Herstellung verschiedener Rheologoiemodule EZ1 bis EZ7

Die in der Tabelle 3.3 aufgeführten Komponenten werden in der angegebenen Reihenfolge unter Rühren zu einer wässrigen Mischung zusammengeführt. Anschließend wird nochmals 10 min lang intensiv gerührt.

**Tabelle 3.3: Herstellung der Rheologiemodule EZ1 bis EZ7**

| | EZ1 | EZ2 | EZ3 | EZ4 | EZ5 | EZ6 | EZ7 |
|---|---|---|---|---|---|---|---|
| | | | | | | | |
| Laponite® RD | 1,50 | 1,09 | 1,09 | 1,09 | 1,09 | 1,09 | 1,09 |
| Pluriol® P900, | 1,00 | 0,73 | 0,73 | 0,73 | 0,73 | 0,73 | 0,73 |
| Parmetol DF 35 | 0,18 | 0,13 | 0,13 | 0,13 | 0,13 | 0,13 | 0,13 |
| deionisiertes Wasser | 97,32 | 70,85 | 70,85 | 70,85 | 70,85 | 70,85 | 70,85 |
| Wässrige Dispersion BM1 | | 12,50 | 12,50 | 12,50 | 12,50 | 12,50 | 12,50 |
| Polyurethan bindemittelDispersion PD1 | | 11,00 | 11,00 | 11,00 | 11,00 | 11,00 | 11,00 |
| Butylglykol | | 1,70 | | | | | |
| n-Pentanol | | | 1,70 | | | | |
| n-Hexanol | | | | 1,70 | | | |
| *n*-Propanol | | | | | 1,70 | | |
| *n*-Butanol | | | | | | 1,70 | |
| n-Octanol | | | | | | | 1,70 |
| Aquacer® 840 | | 1,25 | 1,25 | 1,25 | 1,25 | 1,25 | 1,25 |
| Rheovis® AS 1130 | | 0,25 | 0,25 | 0,25 | 0,25 | 0,25 | 0,25 |
| deionisiertes Wasser | | 0,50 | 0,50 | 0,50 | 0,50 | 0,50 | 0,50 |
| | | | | | | | |
| Summe: | 100,00 | 100,00 | 100,00 | 100,00 | 100,00 | 100,00 | 100,00 |

### 4. Herstellung der nicht erfindungsgemäßen wässrigen Beschichtungszusammensetzungen WBL1 und WBL2, der erfindungsgemäßen wässrigen Beschichtungszusammensetzungen WBL3 bis WBL5 sowie der nicht erfindungsgemäßen wässrigen Beschichtungszusammensetzungen WBL6 bis WBL8 jeweils als Mischsystem auf Basis der Komponenten SL1 bis SL7, BF1 und BF2 sowie EZ1 bis EZ7

Die jeweiligen Beschichtungszusammensetzungen (WBL1 bis WBL8) wurden durch Vermischen der in der Tabelle 4.1 aufgeführten Komponenten in der angegebenen Reigenfolge hergestellt. Nach Zugabe der jeweiligen Basisfarbe zum jeweiligen Stammlack bzw. nach Zugabe des jeweiligen Einstellzusatzes zur jeweiligen vorherigen Mischung wurde gerührt. Die jeweiligen Viskositäten ergeben sich aus den Zusammensetzungen und werden nicht weiter eingestellt. Im Falle von WBL1 liegt die Viskosität / Auslaufzeit bei 20-25 Sekunden, bei allen anderen Beschichtungsstoffen bei 25-35 Sekunden, gemessen in einem DIN-4 Becher.

**Tabelle 4.1: Herstellung der wässrigen Beschichtungszusammensetzungen WBL1 und WBL2 (nicht erfindungsgemäß), WBL3 bis WBL5 (erfindungsgemäß) sowie WBL6 bis WBL8 (nicht erfindungsgemäß)**

| | WBL1 | WBL2 | WBL3 | WBL4 | WBL5 | WBL6 | WBL7 | WBL8 |
|---|---|---|---|---|---|---|---|---|
| **Stammlack** | | | | | | | | |
| **SL1** | 72,00 | | | | | | | |
| **SL2** | | 60,00 | | | | | | |
| **SL3** | | | 60,00 | 65,00 | | | | |
| **SL4** | | | | | 60,00 | | | |
| **SL5** | | | | | | 60,00 | | |
| **SL6** | | | | | | | 60,00 | |
| **SL7** | | | | | | | | 60,00 |
| | | | | | | | | |
| **Basisfarbe** | | | | | | | | |
| **BF1** | 28,00 | | | | | | | |
| **BF2** | | 40,00 | 40,00 | 35,00 | 40,00 | 40,00 | 40,00 | 40,00 |
| | | | | | | | | |
| **Rheologiemodul** | | | | | | | | |
| **EZ1** | 50,00 | | | | | | | |
| **EZ2** | | 50,00 | | | | | | |
| **EZ3** | | | 50,00 | 50,00 | | | | |
| **EZ4** | | | | | 50,00 | | | |
| **EZ5** | | | | | | 50,00 | | |
| **EZ6** | | | | | | | 50,00 | |
| **EZ7** | | | | | | | | 50,00 |
| | | | | | | | | |
| **Summe:** | 150,00 | 150,00 | 150,00 | 150,00 | 150,00 | 150,00 | 150,00 | 150,00 |

### 5.1 Vergleich zwischen den wässrigen Beschichtungszusammensetzungen WBL1 und WBL4 hinsichtlich der Beständigkeit gegen Feuchtigkeit, der Haftungseigenschaften im Steinschlag- bzw. Dampfstrahltest sowie der winkelabhängigen Helligkeiten

Eine Beurteilung der Schwitzwasserempfindlichkeit, der Steinschlag- und Dampfstrahlhaftung sowie des Farbtons für die wässrigen Beschichtungszusammensetzungen WBL1 und WBL4 erfolgte gemäß vorstehend beschriebenen Methoden. Die Ergebnisse sind in den Tabellen 5.1 bis 5.4 zusammengefasst.

**Tabelle 5.1: Einfluss von Schwitzwasser auf Haftung, Quellung sowie Blasenbildung der Mehrschichtaufbauten**

| | nach 1 Stunde | | | | nach 24 Stunden | | |
|---|---|---|---|---|---|---|---|
| | | | | | | | |
| | Blasenbildung | Quellun 9 | Gitterschnitt | | Blasenbildung | Quellung | Gitterschnitt |
| **WBL1,** lackiert nach Methode A | m0/g0 | biO | GT0 | | m0/g0 | iO | GT0 |
| | | | | | | | |
| **WBL4,** lackiert nach Methode B | m0/g0 | biO | GT0 | | m0/g0 | iO | GT0 |

**Tabelle 5.2: Ergebnisse der Untersuchungen hinsichtlich Steinschlag- und Dampfstrahlhaftung**

| | Steinschlag | Dampfstrahl |
|---|---|---|
| WBL1, lackiert nach Methode A | KW2 | < 1 mm |
| | | |
| WBL4, lackiert nach Methode B | KW2 | < 1 mm |

Die Ergebnisse belegen, dass die erfindungsgemäße wässrige Beschichtungszusammensetzung WBL4, basierend auf der wässrigen Dispersion BM1 enthaltend das Polymerisat SCS1 in Kombination mit n-Pentanol gegenüber der nicht erfindungsgemäßen Beschichtungszusammensetzung WBL1 keine Nachteile bei Schwitzwasserbelastung aufweist; auch im Steinschlag- sowie im Dampfstrahltest werden identische Ergebnisse gefunden.

**Tabelle 5.3: Ergebnisse der Untersuchungen hinsichtlich Farbton (winkelabhängige Helligkeit bzw. Flop-Index)**

| | Lackiermethode A | | | Lackiermethode B | |
|---|---|---|---|---|---|
| | **WBL1** | **WBL4** | | **WBL1** | **WBL4** |
| $L^*_{15°}$ | 146,8 | 149,0 | | 144,7 | 147,3 |
| $L^*_{25°}$ | 111,7 | 110,8 | | 110,1 | 109,6 |
| $L^*_{45°}$ | 56,8 | 53,9 | | 57,2 | 53,9 |
| $L^*_{75°}$ | 32,6 | 31,5 | | 33,8 | 31,8 |
| Flop-Index | 342,6 | 351,7 | | 325,7 | 344,7 |

**Tabelle 5.4: Unterschiede im Flop zwischen Lackiermethode A und B**

| | **WBL1** | **WBL4** |
|---|---|---|
| Flop (Methode A) - Flop (Methode B) | 16,9 | 7,1 |

Die erfindungsgemäße Beschichtungszusammensetzung WBL4 weist sowohl bei einer Lackierung mit zwischenzeitlichem flash-off (Methode A) als auch bei einer Nass-in-Nass-Lackierung (Methode B) eine bessere Aluminiumpigment-Orientierung und damit einen besseren Flop auf als das Vergleichsmaterial WBL1. Darüber hinaus wird für WBL4 ein signifikant geringerer Unterschied zwischen beiden Lackiermethoden und damit eine bessere Farbtonkonstanz bei unterschiedlichen Lackierparametern gefunden.

**5.2 Vergleich zwischen den wässrigen Beschichtungszusammensetzungen WBL2 und WBL3 hinsichtlich winkelabhängigen Helligkeiten (Flop)**

Die wässrigen Beschichtungszusammensetzungen WBL2 (nicht erfindungsgemäß) und WBL3 (erfindungsgemäß) wurden hinsichtlich des Farbtons (winkelabhängige Helligkeiten bzw. Flop) gemäß vorstehend beschriebenen Methoden untersucht. Die Ergebnisse sind in der Tabelle 5.6 zusammengefasst.

**Tabelle 5.6: Ergebnisse der Untersuchungen hinsichtlich Farbton (winkelabhängige Helligkeit bzw. Flop-Index)**

| | WBL2 | WBL3 |
|---|---|---|
| Flop (Methode A) | 299 | 355 |
| Flop (Methode B) | 289 | 360 |
| | | |
| Flop (Methode A) - Flop (Methode B) | 10 | -5 |

Die Ergebnisse belegen, dass nicht alleine der Einsatz der wässrigen Dispersion BM1 enthaltend das Polymerisat SCS1 zu einer hervorragenden Orientierung der Effektpigmente und damit zu einem guten Flop führt, sondern dass auch die Wahl des organischen Cosolventes von Bedeutung ist. Bei Substitution von n-Pentanol durch Butylglykol (WBL2) werden unabhängig von der Lackiermethode ein signifikant schlechterer Flop sowie eine größere Abhängigkeit des Flops von den Lackierparametern gefunden.

**5.3 Vergleich zwischen den erfindungsgemäßen wässrigen Beschichtungszusammensetzungen WBL3 und WBL5 sowie den nicht erfindungsgemäßen wässrigen Beschichtungszusammensetzungen WBL6 bis WBL8 hinsichtlich Farbton (Flop-Index)**

Die Untersuchungen an den wässrigen Beschichtungszusammensetzungen WBL3 und WBL5 (erfindungsgemäß, enthaltend die wässrige Dispersion BM1 enthaltend das Polymerisat SCS1) in Kombination mit n-Pentanol bzw. n-Hexanol) sowie WBL6 bis WBL8 (nicht erfindungsgemäß, enthaltend nicht erfindungsgemäß einzusetzende Alkohole) erfolgten gemäß der vorstehend beschriebenen Methoden. Tabellen 5.7 bis 5.9 fassen die Ergebnisse zusammen.

**Tabelle 5.7: Ergebnisse der Untersuchungen hinsichtlich Farbton (winkelabhängige Helligkeit bzw. Flop-Index)**

| | WBL3 | WBL5 | WBL6 | WBL7 | WBL8 |
|---|---|---|---|---|---|
| Flop (Methode A) | 355 | 364 | 310 | 326 | 343 |
| Flop (Methode B) | 360 | 355 | 292 | 312 | 305 |
| | | | | | |
| Flop (Methode A) - Flop (Methode B) | -5 | 9 | 18 | 14 | 38 |

Die erfindungsgemäßen wässrigen Beschichtungszusammensetzungen WBL3 und WBL5 weisen unabhängig von der Lackiermethode die besten Flop-Werte auf und zeigen darüber hinaus die geringste Farbtondifferenz bei unterschiedlichen Lackierparametern. Sowohl der Einsatz kürzerer- als auch längerkettiger Monoalkohole führt dagegen zu einer Verschlechterung der Farbtonwerte und einer höheren Farbtonempfindlichkeit bezüglich der angewandten Lackiermethoden.

Alle erfindungsgemäßen Reparaturbeschichtungsmittel weisen einen VOC-Gehalt von weniger als 250 g/l auf.

## Patentansprüche

**1.** Mischsystem zur Herstellung von wässrigen Reparaturbeschichtungsmitteln enthaltend

- wenigstens eine Komponente (1) als pigmentfreien Stammlack enthaltend mindestens ein physikalisch härtendes Polyurethan oder ein selbstvernetzendes Polyurethan oder ein fremdvernetzendes Polyurethan
• wenigstens eine Komponente (2) als Basisfarbe enthaltend mindestens ein physikalisch trocknendes Polyurethan oder ein selbstvernetzendes Polyurethan oder ein fremdvernetzendes Polyurethan und mindestens ein farbgebendes und/oder optisch effektgebendes Pigment
• wenigstens eine Komponente (3) als Rheologiemodul enthaltend mindestens einen anorganischen und/oder organischen Verdicker,

**dadurch gekennzeichnet, dass**
wenigstens eine der Komponenten (1), (2) oder (3) eine wässrige Dispersion enthaltend wenigstens ein Saat-Kern-Schale-Polymerisat (SCS) umfasst und wenigstens eine der Komponenten (1), (2) oder (3) wenigstens einen aliphatischen Monoalkohol mit 5 Kohlenstoffatomen und/oder wenigstens einen aliphatischen Monoalkohol mit 6 Kohlenstoffatomen umfasst,
wobei
die wässrige Dispersion hergestellt wird durch die aufeinanderfolgende radikalische Emulsionspolymerisation von drei voneinander verschiedenen Monomerenmischungen (A), (B) und (C) von olefinisch ungesättigten Monomeren,
wobei
optional wenigstens eine der Monomerenmischungen (A), (B) oder (C) mindestens ein wenigstens eine olefinisch ungesättigte Gruppe aufweisendes Polyurethan (P) enthält und
wobei
vor Zumischung des optionalen Polyurethans (P) zu wenigstens einer der Monomerenmischungen (A), (B) oder (C)

die Monomerenmischung (A) mindestens 50 Gew.-% von Monomeren mit einer Löslichkeit in Wasser von kleiner als 0,5 g/l bei 25 °C enthält und ein Polymerisat (a), welches aus der Mischung (A) hergestellt wird, eine Glasüberganstemperatur von 10 bis 65 °C besitzt,
die Monomerenmischung (B) mindestens ein mehrfach ungesättigtes Monomer enthält und ein Polymerisat (b), welches aus der Mischung (B) hergestellt wird, eine Glasübergangstemperatur von -35 bis 15°C besitzt,
ein Polymerisat (c), welches aus der Monomerenmischung (C) hergestellt wird, eine Glasübergangstemperatur von -50 bis 15 °C besitzt,

und wobei

i. zunächst die Monomerenmischung (A) polymerisiert wird,
ii. dann die Monomerenmischung (B) in Gegenwart des unter i. hergestellten Polymerisats polymerisiert wird, und
iii. danach die Monomerenmischung (C) in Gegenwart des unter ii. hergestellten Polymerisats polymerisiert wird.

**2.** Mischsystem gemäß Anspruch 1, **dadurch gekennzeichnet, dass** wenigstens eine der Komponenten (1), (2) oder (3) sowohl die wässrige Dispersion enthaltend wenigstens ein Saat-Kern-Schale-Polymerisat (SCS) als auch den aliphatischen Monoalkohol mit 5 Kohlenstoffatomen und/oder wenigstens einen aliphatischen Monoalkohol mit 6 Kohlenstoffatomen umfasst.

**3.** Mischsystem gemäß einem der Ansprüche 1 oder 2, **dadurch gekennzeichnet, dass** wenigstens eine der Monomerenmischungen (A), (B) oder (C) mindestens ein Polyurethan (P) enthält.

**4.** Mischsystem gemäß einem der Ansprüche 1 bis 3, **dadurch gekennzeichnet, dass** der wenigstens eine aliphatische Monoalkohol mit 5 Kohlenstoffatomen n-Pentanol ist und der wenigstens eine aliphatische Monoalkohol mit 6 Kohlenstoffatomen n-Hexanol ist.

**5.** Mischsystem gemäß einem der Ansprüche 1 bis 4, **dadurch gekennzeichnet, dass** der gewichtsprozentuale Anteil der Summe aller aliphatischen Monoalkohole mit 5 Kohlenstoffatomen und 6 Kohlenstoffatomen in der jeweiligen Komponente (1), (2) oder (3) weniger als 5 Gew.-% bezogen auf die jeweilige Komponente (1), (2) oder (3) beträgt, wobei mindestens eine der Komponenten (1), (2) oder (3) einen gewichtsprozentualen Anteil der Summe aller aliphatischen Monoalkohole mit 5 Kohlenstoffatomen und 6 Kohlenstoffatomen von mindestens 1,0 Gew.-% bezogen auf das Gesamtgewicht der jeweiligen Komponente (1), (2) oder (3) aufweist.

**6.** Mischsystem gemäß einem der Ansprüche 1 bis 5, **dadurch gekennzeichnet, dass** der Anteil der Monomerenmischung (A) von 0,1 bis 10 Gew.-%, der Anteil der Monomerenmischung (B) von 60 bis 80 Gew.-% und der Anteil der Monomerenmischung (C) von 10 bis 30 Gew.-%, jeweils bezogen auf die Summe der Einzelmengen der Mischungen (A), (B) und (C), beträgt.

7. Mischsystem gemäß einem der Ansprüche 1 bis 6, **dadurch gekennzeichnet, dass** die Monomerenmischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind, enthält.

8. Mischsystem gemäß einem der Ansprüche 1 bis 7, **dadurch gekennzeichnet, dass** die Monomerenmischung (B) neben dem mindestens einen mehrfach olefinisch ungesättigten Monomer noch mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind, enthält.

9. Mischsystem gemäß einem der Ansprüche 1 bis 8, **dadurch gekennzeichnet, dass** die Monomerenmischung (C) mindestens eine alpha-beta-ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest enthält.

10. Wässriges Reparaturbeschichtungsmittel hergestellt durch das Vermischen der Komponenten (1), (2) und (3) des Mischsystems gemäß einem der Ansprüche 1 bis 9, wobei für den Fall, dass die Komponente (1) und/oder (2) ein fremdvernetzendes Polyurethan enthält zusätzlich ein Vernetzer beigemischt wird.

11. Wässrige Reparaturbeschichtungsmittel gemäß Anspruch 10, **dadurch gekennzeichnet, dass** der gewichtsprozentuale Anteil des mindestens einen in der wässrigen Dispersionen enthaltenen Saat-Kern-Schale-Polymerisats (SCS) bezogen auf das Gesamtgewicht des wässrigen Reparaturbeschichtungsmittels 1,0 bis 24,0 Gew.-% beträgt.

12. Wässriges Reparaturbeschichtungsmittel gemäß einem der Ansprüche 10 oder 11, **dadurch gekennzeichnet, dass** der gewichtsprozentuale Anteil der Summe aller aliphatischen Monoalkohole mit 5 Kohlenstoffatomen und 6 Kohlenstoffatomen bezogen auf das Gesamtgewicht des Reparaturbeschichtungsmittels von 0,2 bis 3,0 Gew.-% beträgt.

13. Wässrige Reparaturbeschichtungsmittel gemäß einem der Ansprüche 10 bis 12, **dadurch gekennzeichnet, dass** das wässrige Reparaturbeschichtungsmittel einen VOC-Gehalt von kleiner 250 g/L aufweist.

14. Verfahren zur Herstellung von Reparaturbeschichtungsmitteln, **dadurch gekennzeichnet, dass** hierfür das Mischsystem gemäß einem der Ansprüche 1 bis 9 eingesetzt wird.

15. Verwendung des Mischsystems gemäß einem der Ansprüche 1 bis 9 zur Herstellung von Reparaturbeschichtungsmitteln für die Automobilreparaturlackierung.

## Claims

1. Mixer system for producing aqueous refinish compositions, comprising

    - at least one component (1) as pigment-free base varnish, comprising at least one physically curing polyurethane or a self-crosslinking polyurethane or an externally crosslinking polyurethane
    - at least one component (2) as tinting base, comprising at least one physically drying polyurethane or a self-crosslinking polyurethane or an externally crosslinking polyurethane and at least one color-imparting and/or optical-effect-imparting pigment
    - at least one component (3) as rheology module, comprising at least one inorganic and/or organic thickener,

    **characterized in that**
    at least one of the components, (1), (2) or (3), comprises an aqueous dispersion comprising at least one polymer SCS, and at least one of the components, (1), (2) or (3), comprises at least one aliphatic monoalcohol having 5 carbon atoms and/or at least one aliphatic monoalcohol having 6 carbon atoms,
    the aqueous dispersion being prepared by the successive radical emulsion polymerization of three mutually different

monomer mixtures (A), (B), and (C) of olefinically unsaturated monomers, where
optionally at least one of the monomer mixtures, (A), (B) or (C), comprises at least one polyurethane (P) containing at least one olefinically unsaturated group, and
where,
before the optional polyurethane (P) is admixed to at least one of the monomer mixtures (A), (B) or (C), the monomer mixture (A) comprises at least 50 wt% of monomers having a solubility in water of less than 0.5 g/l at 25°C, and a polymer (a) which is prepared from the mixture (A) possesses a glass transition temperature of 10 to 65°C,
the monomer mixture (B) comprises at least one polyunsaturated monomer, and a polymer (b) which is prepared from the mixture (B) possesses a glass transition temperature of -35 to 15°C,
a polymer (c) which is prepared from the monomer mixture (C) possesses a glass transition temperature of -50 to 15°C,
and where

i. first the monomer mixture (A) is polymerized,
ii. then the monomer mixture (B) is polymerized in the presence of the polymer prepared under i., and
iii. thereafter the monomer mixture (C) is polymerized in the presence of the polymer prepared under ii.

2. Mixer system according to Claim 1, **characterized in that** at least one of the components, (1), (2) or (3), comprises not only the aqueous dispersion comprising at least one polymer SCS but also the aliphatic monoalcohol having 5 carbon atoms and/or at least one aliphatic monoalcohol having 6 carbon atoms.

3. Mixer system according to either of Claims 1 and 2, **characterized in that** at least one of the monomer mixtures, (A), (B) or (C), comprises at least one polyurethane (P).

4. Mixer system according to any of Claims 1 to 3, **characterized in that** the at least one aliphatic monoalcohol having 5 carbon atoms is n-pentanol and the at least one aliphatic monoalcohol having 6 carbon atoms is n-hexanol.

5. Mixer system according to any of Claims 1 to 4, **characterized in that** the weight-percentage fraction of the sum of all aliphatic monoalcohols having 5 carbon atoms and 6 carbon atoms in the respective component (1), (2) or (3) is less than 5 wt%, based on the respective component (1), (2) or (3), and at least one of the components, (1), (2) or (3), has a weight-percentage fraction of the sum of all aliphatic monoalcohols having 5 carbon atoms and 6 carbon atoms of at least 1.0 wt%, based on the total weight of the respective component (1), (2) or (3).

6. Mixer system according to any of Claims 1 to 5, **characterized in that** the fraction of the monomer mixture (A) is from 0.1 to 10 wt%, the fraction of the monomer mixture (B) is from 60 to 80 wt%, and the fraction of the monomer mixture (C) is from 10 to 30 wt%, based in each case on the sum of the individual amounts of the mixtures (A), (B), and (C) .

7. Mixer system according to any of Claims 1 to 6, **characterized in that** the monomer mixture (A) comprises at least one monounsaturated ester of (meth) acrylic acid with an alkyl radical, and at least one vinyl group-containing, monoolefinically unsaturated monomer with a radical arranged on the vinyl group that is aromatic or that is mixed saturated aliphatic-aromatic, in which case the aliphatic fractions of the radical are alkyl groups.

8. Mixer system according to any of Claims 1 to 7, **characterized in that** the monomer mixture (B), in addition to the at least one polyolefinically unsaturated monomer, further comprises at least one monounsaturated ester of (meth)acrylic acid with an alkyl radical, and at least one vinyl group-containing, monoolefinically unsaturated monomer with a radical arranged on the vinyl group that is aromatic or that is mixed saturated aliphatic-aromatic, in which case the aliphatic fractions of the radical are alkyl groups.

9. Mixer system according to any of Claims 1 to 8, **characterized in that** the monomer mixture (C) comprises at least one alpha-beta-unsaturated carboxylic acid, at least one monounsaturated ester of (meth) acrylic acid with an alkyl radical substituted by a hydroxyl group, and at least one monounsaturated ester of (meth)acrylic acid with an alkyl radical.

10. Aqueous refinish composition produced by mixing components (1), (2), and (3) of the mixer system according to any of Claims 1 to 9, with the further admixing of a crosslinker if component (1) and/or (2) comprises an externally crosslinking polyurethane.

11. Aqueous refinish composition according to Claim 10, **characterized in that** the weight-percentage fraction of the at least one polymer SCS in the aqueous dispersion, based on the total weight of the aqueous refinish composition, is 1.0 to 24.0 wt%.

12. Aqueous refinish composition according to either of Claims 10 and 11, **characterized in that** the weight-percentage fraction of the sum of all aliphatic monoalcohols having 5 carbon atoms and 6 carbon atoms, based on the total weight of the refinish composition, is from 0.2 to 3.0 wt%.

13. Aqueous refinish composition according to any of Claims 10 to 12, **characterized in that** the aqueous refinish composition has a VOC content of less than 250 g/l.

14. Method for producing refinish compositions, **characterized in that** for that purpose the mixer system according to any of Claims 1 to 9 is used.

15. Use of the mixer system according to any of Claims 1 to 9 for producing refinish compositions for automotive refinishing.

**Revendications**

1. Système mixte pour la préparation d'agents aqueux de revêtement de réparation contenant

    • au moins un composant (1) en tant que laque-mère exempte de pigment contenant au moins un polyuréthane durcissant physiquement ou un polyuréthane autoréticulant ou un polyuréthane à réticulation externe
    • au moins un composant (2) en tant que peinture de base contenant au moins un polyuréthane séchant physiquement ou un polyuréthane autoréticulant ou un polyuréthane à réticulation externe et au moins un pigment colorant et/ou à effet optique
    • au moins un composant (3) en tant que module de rhéologie contenant au moins un épaississant inorganique et/ou organique,

    **caractérisé en ce qu'**au moins l'un des composants (1), (2) ou (3) comprend une dispersion aqueuse contenant au moins un polymérisat de type grain-noyau-enveloppe (SCS) et au moins l'un des composants (1), (2) ou (3) comprend un monoalcool aliphatique comportant 5 atomes de carbone et/ou au moins un monoalcool aliphatique comportant 6 atomes de carbone,
    la dispersion aqueuse étant préparée par la polymérisation en émulsion par voie radicalaire consécutive de trois mélanges de monomères différents les uns des autres (A), (B) et (C) de monomères oléfiniquement insaturés, éventuellement au moins l'un des mélanges de monomères (A), (B) ou (C) contenant au moins un polyuréthane (P) présentant au moins un groupe oléfiniquement insaturé et,
    avant le mélange du polyuréthane (P) éventuel à au moins l'un des mélanges de monomères (A), (B) ou (C),

    le mélange de monomères (A) contenant au moins 50 % en poids de monomères dotés d'une solubilité dans l'eau inférieure à 0,5 g/l à 25 °C et un polymérisat (a), qui est préparé à partir du mélange (A), possédant une température de transition vitreuse de 10 à 65 °C,
    le mélange de monomères (B) contenant au moins un monomère plusieurs fois insaturé et un polymérisat (b), qui est préparé à partir du mélange (B), possédant une température de transition vitreuse de -35 à 15 °C,
    un polymérisat (c), qui est préparé à partir du mélange de monomères (C), possédant une température de transition vitreuse de -50 à 15 °C,
    et

    i. le mélange de monomères (A) étant polymérisé en premier,
    ii. ensuite le mélange de monomères (B) étant polymérisé en présence du polymérisat préparé au point i., et
    iii. ensuite le mélange de monomères (C) étant polymérisé en présence du polymérisat préparé au point ii..

2. Système mixte selon la revendication 1, **caractérisé en ce qu'**au moins l'un des composants (1), (2) ou (3) contient aussi bien la dispersion aqueuse contenant au moins un polymérisat de type grain-noyau-enveloppe (SCS) que le monoalcool aliphatique comportant 5 atomes de carbone et/ou qu'au moins un monoalcool aliphatique comportant 6 atomes de carbone.

3. Système mixte selon l'une quelconque des revendications 1 et 2, **caractérisé en ce qu'**au moins un des mélanges de monomères (A), (B) et (C) contient au moins un polyuréthane (P).

4. Système mixte selon l'une quelconque des revendications 1 à 3, **caractérisé en ce que** l'au moins un monoalcool aliphatique comportant 5 atomes de carbone est le n-pentanol et l'au moins un monoalcool aliphatique comportant 6 atomes de carbone est le n-hexanol.

5. Système mixte selon l'une quelconque des revendications 1 à 4, **caractérisé en ce que** la proportion en pourcentage en poids de la somme de tous les monoalcools aliphatiques comportant 5 atomes de carbone et 6 atomes de carbone dans le composant respectif (1), (2) ou (3) est inférieure à 5 % en poids par rapport au composant respectif (1), (2) ou (3), au moins l'un des composants (1), (2) ou (3) présentant une proportion en pourcentage en poids de la somme de tous les monoalcools aliphatiques comportant 5 atomes de carbone et 6 atomes de carbone d'au moins 1,0 % en poids par rapport au poids total du composant respectif (1), (2) ou (3).

6. Système mixte selon l'une quelconque des revendications 1 à 5, **caractérisé en ce que** la proportion du mélange de monomères (A) est de 0,1 à 10 % en poids, la proportion du mélange de monomères (B) est de 60 à 80 % en poids, et la proportion du mélange de monomères (C) est de 10 à 30 % en poids, à chaque fois par rapport à la somme des quantités individuelles des mélanges (A), (B) et (C).

7. Système mixte selon l'une quelconque des revendications 1 à 6, **caractérisé en ce que** le mélange de monomères (A) contient au moins un ester monoinsaturé d'acide (méth)acrylique doté d'un radical alkyle et au moins un monomère monooléfiniquement insaturé contenant un groupe vinyle doté d'un radical situé au niveau du groupe vinyle, qui est aromatique ou mixte aliphatique saturé-aromatique, les parties aliphatiques du radical étant alors des groupes alkyle.

8. Système mixte selon l'une quelconque des revendications 1 à 7, **caractérisé en ce que** le mélange de monomères (B), outre l'au moins un monomère oléfiniquement insaturé plusieurs fois, contient encore au moins un ester monoinsaturé d'acide (méth)acrylique doté d'un radical alkyle et au moins un monomère monooléfiniquement insaturé contenant un groupe vinyle doté d'un radical situé au niveau du groupe vinyle, qui est aromatique ou mixte aliphatique saturé-aromatique, les parties aliphatiques du radical étant alors des groupes alkyle.

9. Système mixte selon l'une quelconque des revendications 1 à 8, **caractérisé en ce que** le mélange de monomères (C) contient au moins un acide carboxylique alpha-bêta-insaturé, au moins un ester monoinsaturé d'acide (méth)acrylique doté d'un radical alkyle substitué par un groupe hydroxyle et au moins un ester monoinsaturé d'acide (méth)acrylique doté d'un radical alkyle.

10. Agent aqueux de revêtement de réparation préparé par le mélange des composants (1), (2) et (3) du système mixte selon l'une quelconque des revendications 1 à 9, dans lequel, dans le cas où le composant (1) et/ou (2) contient un polyuréthane à réticulation externe, un agent de réticulation est de plus mélangé.

11. Agent aqueux de revêtement de réparation selon la revendication 10, **caractérisé en ce que** la proportion en pourcentage en poids de l'au moins un polymérisat de type grain-noyau-enveloppe (SCS) contenu dans les dispersions aqueuses, par rapport au poids total de l'agent aqueux de revêtement de réparation, est de 1,0 à 24,0 % en poids.

12. Agent aqueux de revêtement de réparation selon l'une quelconque des revendications 10 et 11, **caractérisé en ce que** la proportion en pourcentage en poids de la somme de tous les monoalcools aliphatiques comportant 5 atomes de carbone et 6 atomes de carbone, par rapport au poids total de l'agent de revêtement de réparation, est de 0,2 à 3,0 % en poids.

13. Agent aqueux de revêtement de réparation selon l'une quelconque des revendications 10 à 12, **caractérisé en ce que** l'agent aqueux de revêtement de réparation présente une teneur en COV inférieure à 250 g/L.

14. Procédé pour la préparation d'agents de revêtement de réparation, **caractérisé en ce que** le système mixte selon l'une quelconque des revendications 1 à 9 est utilisé à cet effet.

15. Utilisation du système mixte selon l'une quelconque des revendications 1 à 9 pour la préparation d'agents de revêtement de réparation pour la peinture de réparation automobile.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9217554 A1
- WO 0118129 A1
- DE 19914896 A1
- DE 19948004 A1
- EP 0228003 A1
- EP 0634431 A1
- WO 9215405 A
- DE 4437535 A1
- WO 9115528 A
- EP 0521928 B1
- EP 0562329 A2
- DE 10043405 C1
- WO 9749745 A
- WO 9749747 A
- EP 0228003 B2


### In der Beschreibung aufgeführte Nicht-Patentliteratur


- **LACKE ; DRUCKFARBEN.** Römpp Chemie Lexikon. Georg Thieme Verlag, 1998, 274
- **BROCK ; GROTEKLAES ; MISCHKE.** Lehrbuch der Lacktechnologie. Vincentz Verlag, 2000, 332 ff
- Römpp Lexikon, Lacke und Druckfarben. Georg Thieme Verlag, 1998, 393-394
- Effektpigmente. Römpp Lexikon Lacke und Druckfarben. Georg Thieme Verlag, 1998, 176
- Römpp Lexikon, Lacke und Druckfarben. Georg Thieme Verlag, 1998, 599
- **X.- S. CHAI ; Q.X. HOU ; F.J. SCHORK.** *Journal of Applied Polymer Science,* 2006, vol. 99, 1296-1301
- **T.G. FOX.** *Bull. Am. Phys. Soc.,* 1956, vol. 1, 123
- Polyurethane. Kunststoff-Handbuch. Carl Hanser Verlag, 1983, vol. 7